Europäisches Patentamt

European Patent Office

Office européen des brevets

(11) Publication number: **0 452 944 A1**

# EUROPEAN PATENT APPLICATION

(21) Application number: 91106262.8

(51) Int. Cl.⁵: **G05B 19/42, B25J 9/18**

(22) Date of filing: 18.04.91

(30) Priority: 18.04.90 JP 100301/90
20.04.90 JP 102870/90

(43) Date of publication of application:
23.10.91 Bulletin 91/43

(84) Designated Contracting States:
DE GB

(71) Applicant: HITACHI, LTD.
6, Kanda Surugadai 4-chome
Chiyoda-ku, Tokyo 101(JP)

(72) Inventor: Matoba, Hideaki, No. 541
Hachimanyama Apt.
1545 Yoshida-cho, Totsuka-ku
Yokohama-shi, Kanagawa-ken 244(JP)
Inventor: Onari, Hisashi
2798-18, Kosugaya, Sakae-ku
Yokohama-shi, Kanagawa-ken 247(JP)
Inventor: Matsuzaki, Kichie
5-7-17, Hongoudai, Sakae-ku
Yokohama-shi, Kanagawa-ken 247(JP)
Inventor: Inaba, Hidetoshi
Nishi 12-chome, Minami 6 jyou, Chuou-ku
Sapporo-shi, Hokkaidou 064(JP)
Inventor: Watanabe, Masahiro
Keimei-ryo, 850, Maioka-cho, Totsuka-ku
Yokohama-shi, Kanagawa-ken 244(JP)

(74) Representative: Altenburg, Udo, Dipl.-Phys. et
al
Patent- und Rechtsanwälte
Bardehle-Pagenberg-Dost-Altenburg
Frohwitter-Geissler & Partner Postfach 86 06
20
W-8000 München 86(DE)

(54) Method and system for determining assembly processes.

(57) The features include establishment of the product structure data indicating the connecting relation among parts according to structural characteristics of each part concerning assembly, and determination of assembly process for one part involved in the above assembly and at least one other part which is assembled with this part according to the above structure data, while coordinate data expressed by position vector in relation to the world coordinate system and third degree rotation determinant is available as structure data. In addition, the present invention can automatically calculate and determine assembling direction, assembling order and layout of machines used according to the judgment criteria for judging the easiness of assembly including assembling direction of parts and products as well as configuration and function of assembly machine and tools that are used in assembly and information on peripheral environment.

## FIG. 1

SPECIFICATION DECISION SYSTEM

PROCESS PLANNING SYSTEM

2 — DISPLAY APPARATUS

DISPLAY PROCESS

PROCESSOR

- RESULT DISPLAY
- CANDIDATE DISPLAY
- PRODUCTS, PARTS, LAYOUT, MACHINE -TOOL DATA DISPLAY

- DESIGN ORDER
- MENU SELECTION
- NUMERICAL INPUT

1

DATA INPUT APPARATUS — 3

4

INFERENCE MECHANISM

- KEY INPUT
- MOUSE HANDLING

USER

5 — PRODUCT SPECIFICATION

6 — PARTS DATA

MACHINE DATA — 7

TOOL DATA — 8

PERIPHERAL ENVIRONMENT DATA — 9

ASSEMBLABILITY KNOWLEDGE — 10

MACHINE SELECTION KNOWLEDGE — 11

TOOL SELECTION KNOWLEDGE — 12

PLANNING RESULTS — 13

MACHINE LAYOUT KNOWLEDGE — 14

PRODUCT DATA — 15

DATABASE

16

PRODUCTION SYSTEM

## BACKGROUND OF THE INVENTION

### FIELD OF THE INVENTION

The present invention relates to a method and system for determining assembly processes determining directions of assembly for parts which comprise a product, assembling order, machines and tools used and layout of assembly machine in automatic or interactive fashion.

### DESCRIPTION OF THE PRIOR ART

As listed in Japanese Patent Application Laid Open No. 63-288683, the method that was previously available for designing the assembly process automatically was the automatic decision of assembly sequence and work sequence based on the rule of positioning the parts in the lower position first from the position information in the sample product and then placing the parts in the higher position on top of them.

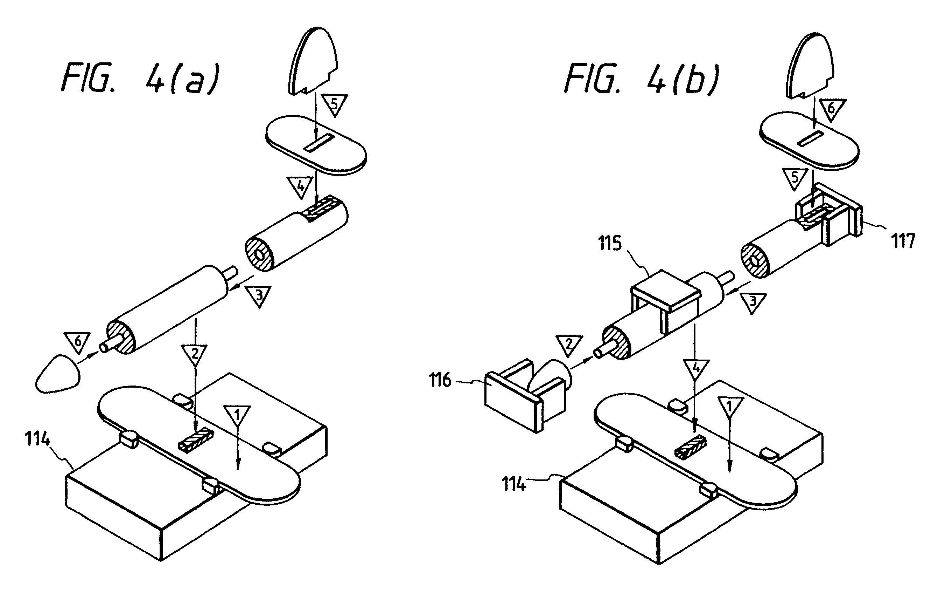

When general assembly is considered, products that can be assembled through simple brickwork explained in the above technology alone hardly exist. In other words, it is possible to assemble products in vertical or horizontal direction in when assembling general products that are engaged by means of screwing, injection or adhesion. In addition, as shown in Figure 4, many assembling orders can be devised even when products are facing the same direction. While it is necessary to consider such assembly work in order to automatically determine the assembling order and order of work for the actual product, conventional technology is incapable of taking these matters into consideration.

Further, in determining the order in ordinary assembly, specific work employing the conventional technology described above, i.e. products that can be assembled by simple brickwork alone, has become hardly conceivable. Although parts are combined by means of screwing, injection and adhesion in ordinary parts assembly work, the existence of a complex assembly preceding relation originating from the method used for combining respective parts has made it necessary to seek an assembling order that satisfies such complex assembly preceding relation and is easy to assemble, or has less assembly man-hour, when determining the assembling order of an actual product.

## SUMMARY OF THE INVENTION

The first object of the present invention is to offer an assembly process designing system that determines the direction of assembly, assembling order, machines used and layout for assembling products in automatic or interactive manner, taking into consideration product configuration, machine and tool functions and structure of peripheral environment to solve such problems of conventional technology.

The second object of the present invention is to offer the method of determining the assembling order which is capable of simply and promptly determining the assembling order for respective parts that comprise a product in an interactive manner.

The third object of the present invention, in addition to the second object, is to offer the method of determining the assembling order which is capable of parts assembly.

The fourth object of the present invention, in addition to the third object, is to offer the method of determining the assembling order which is capable of simultaneous parts assembly.

The fifth object of the present invention, in addition to the fourth object, is to offer the method of determining the assembling order which is capable of determining the order of parts assembly with favorable man-machine interface.

The sixth object of the present invention, in addition to the fifth object, is to grasp the position of respective parts for the overall product while offering the method of determining the assembling order which can easily give instructions and make selections with regard to parts.

The seventh object of the present invention, in addition to the sixth object, is to offer the method of determining the assembling order which can easily tell whether or not the assembling order for respective parts have been determined, and then whether any selection can be made.

The eighth object of the present invention, in addition to the seventh object, is to offer the method of determining the assembling order which is capable of determining the order of parts assembly while grasping the position of respective parts in the overall product.

The features of the present invention for achieving these objects include; establishment of product structure data which indicates the binding relation between parts based on the structure of respective products concerning the assembly; determination of one parts involved in the above assembly; and determination of assembly process for at least one parts which is assembled with this parts based on the determined parts and the above structure data.

Further, it features establishment of coordinate data for feature points of each parts concerning this assembly and criteria for judging the degree of difficulty in assembly, as well as determination of direction of parts assembly involved in the above assembly based on this judgment criteria.

In addition to the above, functions and configurations of machines and their tools that are used in the assembly are recorded in means of memory to determine the machines used in the assembly and their layout, so that operation can be performed according to coordinate data and judgment criteria for degree of difficulty in assembly.

As functions of the present invention which possesses these features, the present invention is capable of automatically calculating the direction of assembly, the assembling order and layout of machines that are used by storing coordinate data which expresses configuration and features of parts concerning the assembly by position vector in relation to world coordinate system and determinant comprised of third-degree rotation determinants, judgment criteria on easiness of assembly according to assembling direction of parts and products, and configuration and functions of assembly machine and tools used in the assembly; reading the peripheral environment; and using means of operation based on the content of the read out. Moreover, the direction of assembly, the assembling order and layout of machines that are used can be determined through an interactive method in which the user uses a method of input that selects one solution in the event where the results of this calculation is displayed and plural number of patterns exist with regard to the direction of assembly, the assembling order and layout of machines that are used.

The aforementioned objects from the second object to the eighth object can be achieved by establishing the parts that are assembled first from the product structure data which indicates the binding relation between multiple parts and determining the order of parts that are assembled first and parts that are assembled according to the above product structure data after the parts that are first assembled.

Further, prior to this decision, the product-compatible assembly precedence relation data for limiting the assembling order for each parts based on the above first assembled parts and above structure data is generated.

To put it in a more concrete manner, the second object above can be achieved by determining the order of parts assembly while displaying the parts that can be assembled next on the upper parts display screen as a result of processing the precedence relation data every time the parts to be assembled are specified on the parts display screen, after the product-compatible assembly precedence relation data for limiting the order of parts assembly has been generated, by specifying the parts that are assembled first on the parts display screen in relation to the product structure data which indicates the binding relation between multiple number of parts that comprise a product.

The third object above can be achieved by generating the group-compatible assembly precedence relation data by specifying the parts that are assembled first in relation to group-compatible product structure data and having that precedence relation data generated as the product-compatible assembly precedence relation data when multiple number of parts which comprised a product are divided into groups of two or more.

The fourth object can be achieved by determining the assembling order for parts while allowing for simultaneous assembly by selecting the parts that can be assembled on the parts display screen when two or more parts that can be assembled next are generated as a result of processing assembly precedence relation data as renewable data.

The fifth object can be achieved when the guidance which is needed to urge the next operation is displayed according to the progress of assembling order determination process.

The sixth object can be achieved by indicating or selecting parts which, in turn, is accomplished by displaying the three-dimensional model of a product based on parts-compatible configuration data which is memorized in advance along with product structure data and indicating the position of parts display.

The seventh object can be achieved by having respective parts that are displayed on the display screen as three-dimensional models, depending on whether they are parts with assembling order already determined, parts that can be assembled next or parts whose assembling order is not determined, become mutually different in their form of display.

The eighth object can be achieved when the three-dimensional model of a product on the display screen can be modified at will through orders from outside in its form of display, including size of display as a whole, position of display, attitude and viewpoint.

The present invention will indicate the following functions through this lineup.

The binding relation between parts when assembling respective parts can be known from the pre-stored product structure data. If the parts that are first assembled are indicated, however, the product-compatible assembly precedence relation data for limiting parts assembling order is generated automatically, and processing that assembly precedence data as renewable data every time the assembled parts are indicated thereafter will automatically generate parts that can be assembled one after another, thereby making it possible to determine the assembling order of parts through the order of this generation. In the event the plural number of parts comprising a product are divided into two or more groups for partial assembly, assembly precedence relation data shall be generated according to group-compatible product structure data. In other words, the task can be achieved by first generating group-compatible assembly precedence relation data by instructing the parts that are assembled first to the group-compatible product structure data, and then integrating these precedence relation data into one so that they can be generated as product-compatible precedence relation data. In the event where two or more parts that can be assembled next are generated as a result of processing assembly precedence relation data as renewable data, simultaneous assembly of these parts shall be possible. However, selecting parts that can be assembled on the parts display screen will make it possible to determine the assembling order of parts while allowing simultaneous assembly. In the event where the guidance necessary for urging the subsequent operation on the display screen at the time of determining the assembling order of parts is displayed according to the progress of assembling order determination process, performing an operation in accordance with such guidance will allow for smooth performance of assembling order determination process.

Moreover, in the event where a three-dimensional model of a product is displayed on the display screen according to the parts-compatible configuration data which is memorized in advance along with product structure data, position and configuration of respective parts can be seen at a glance, and instructing the position of parts display will allow for easy instruction or selection of parts. In the event where the form of display is different for respective parts that are displayed as three-dimensional models on the display screen depending on whether they are parts with assembling order already determined, parts that can be assembled next or parts whose assembling order is not determined, the status of assembling order determination for respective parts can be known immediately. In the event where the three-dimensional model of a product can be modified at will in its form of display, including size of display as a whole, position of display, attitude and viewpoint through orders from outside, it will make it possible to grasp the three-dimensional model in greater detail.

The foregoing and other objects, advantages, manner of operation and novel features of the present invention will be understood from the following detailed description when read in connection with the accompanying drawings.

BRIEF DESCRIPTION OF THE DRAWINGS

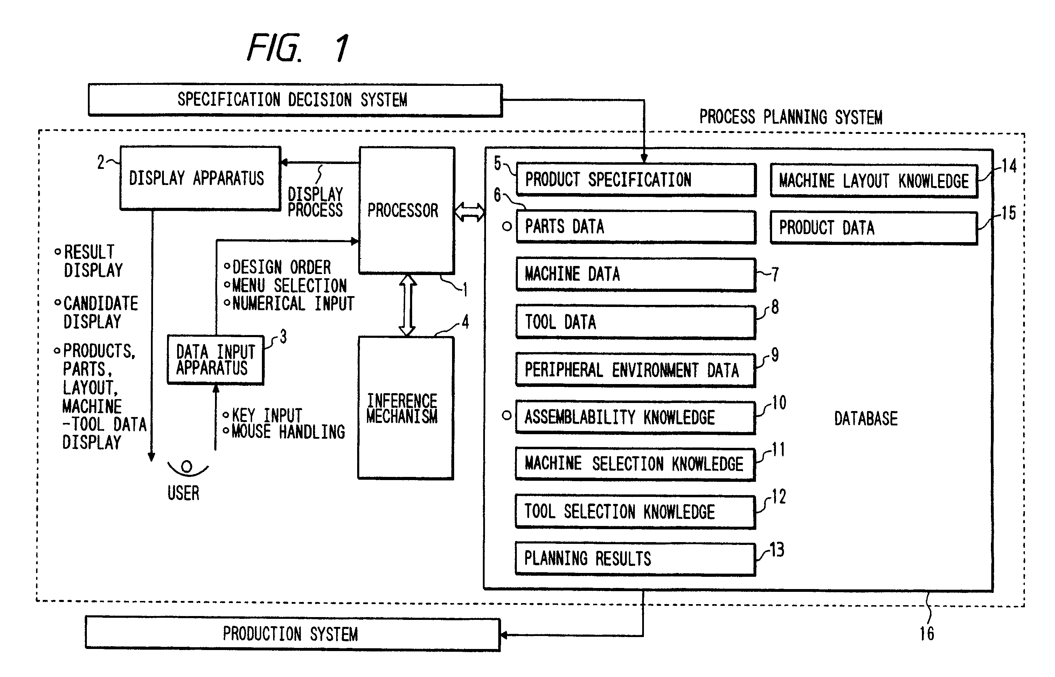

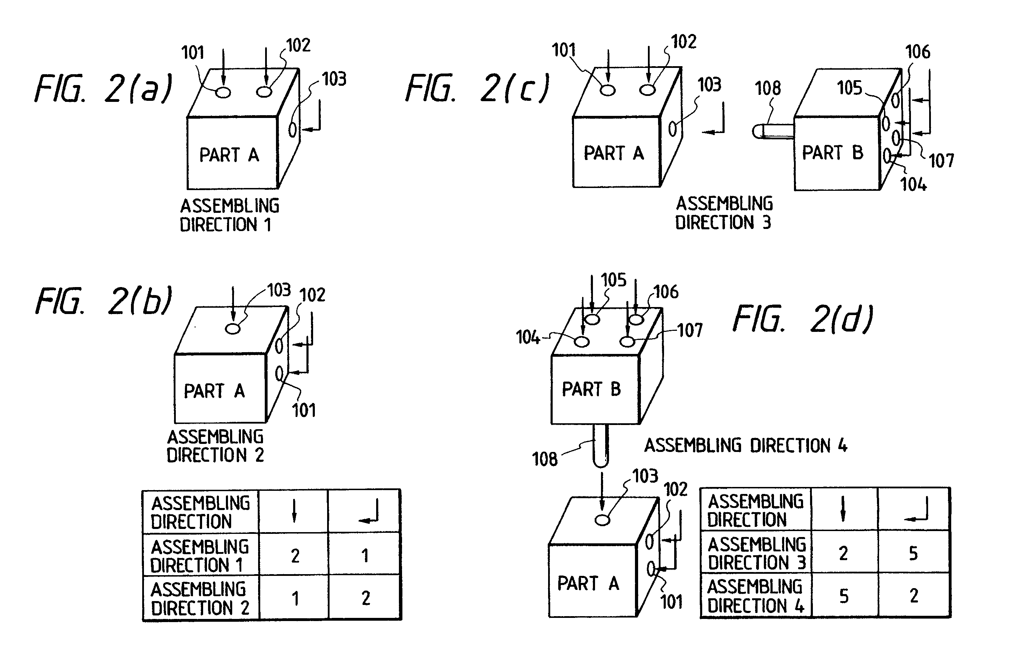

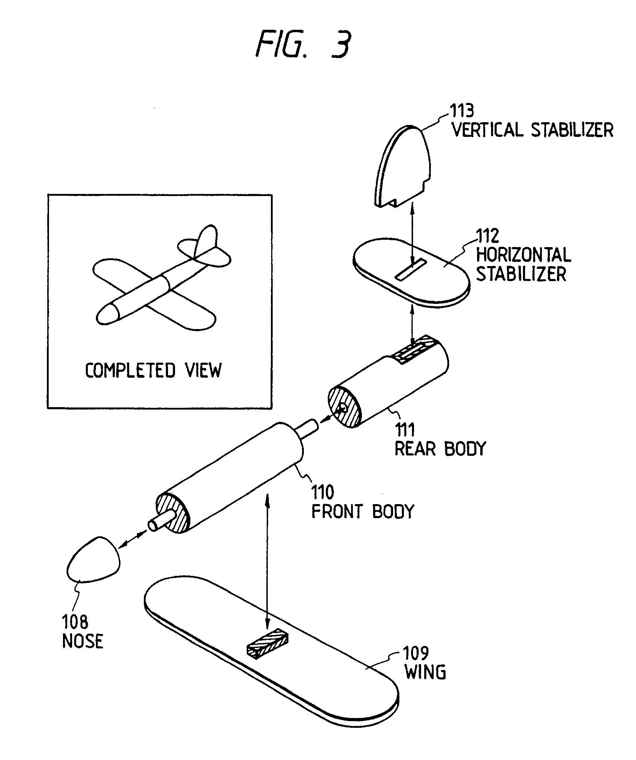

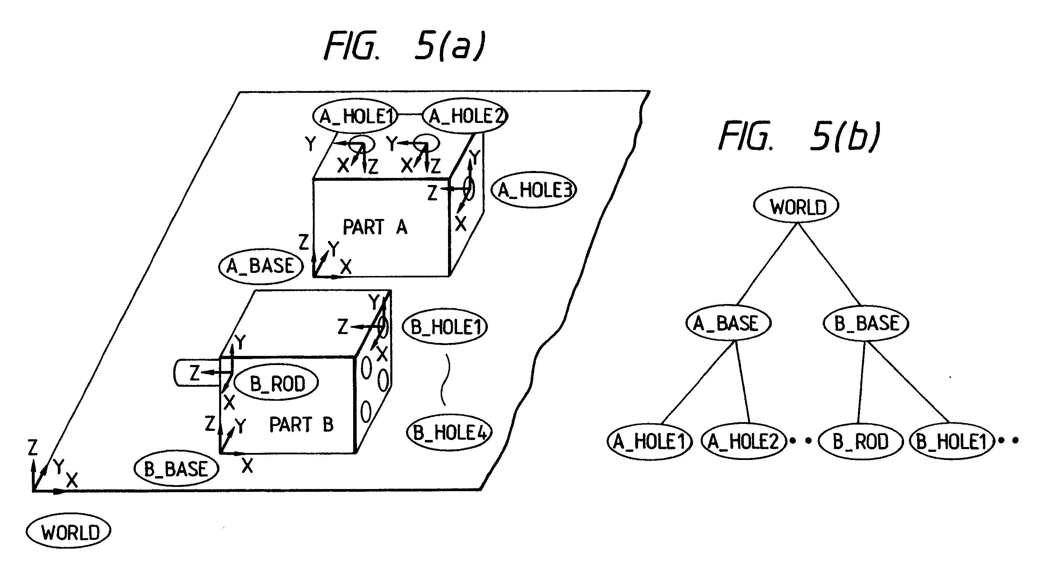

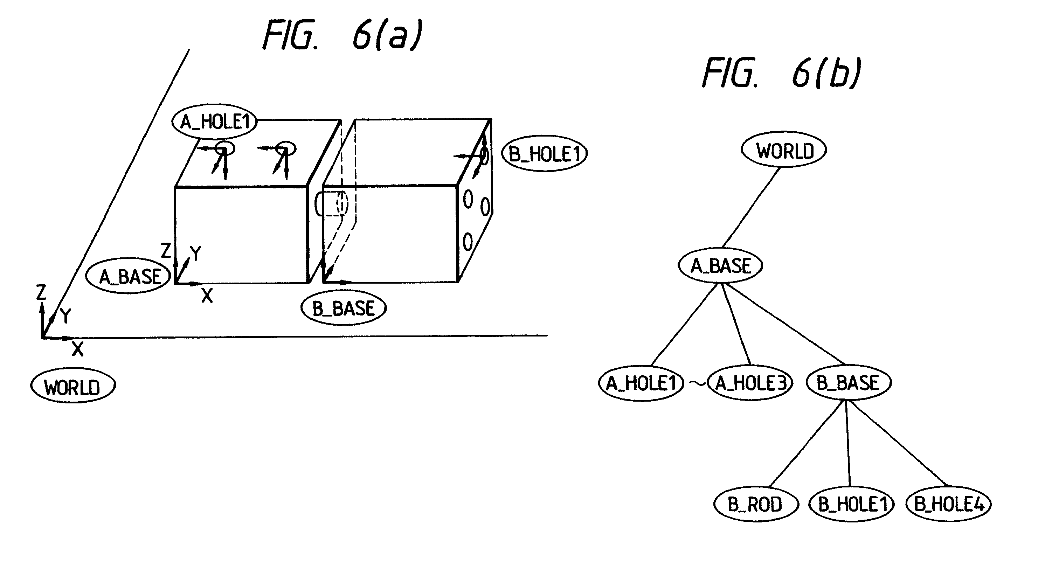

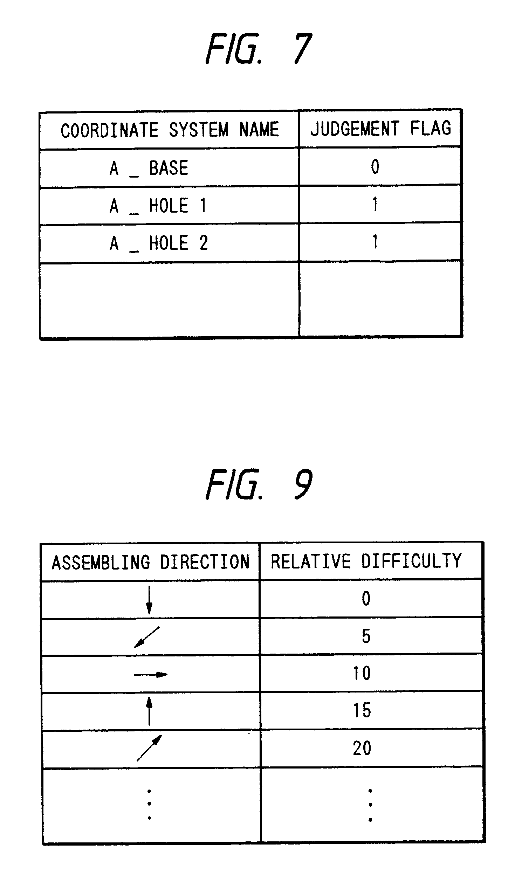

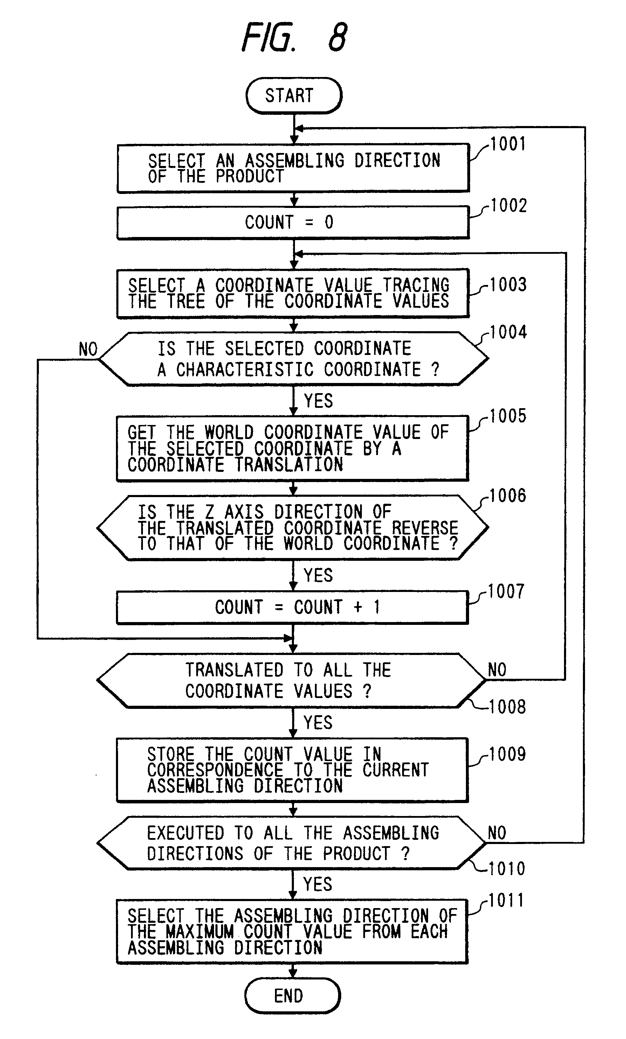

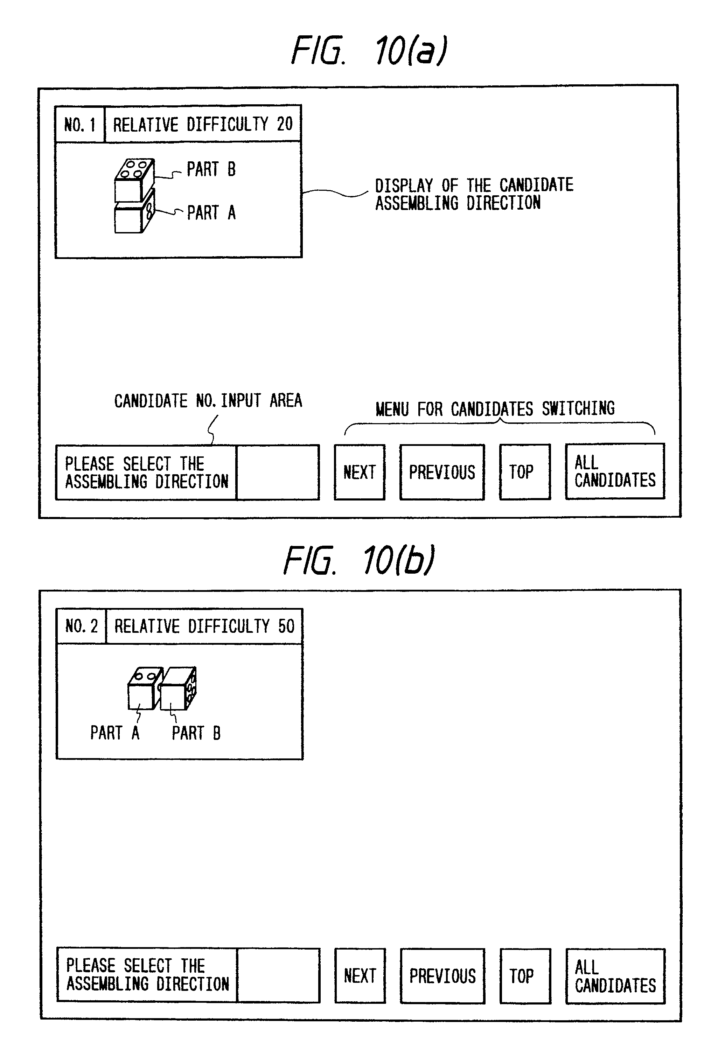

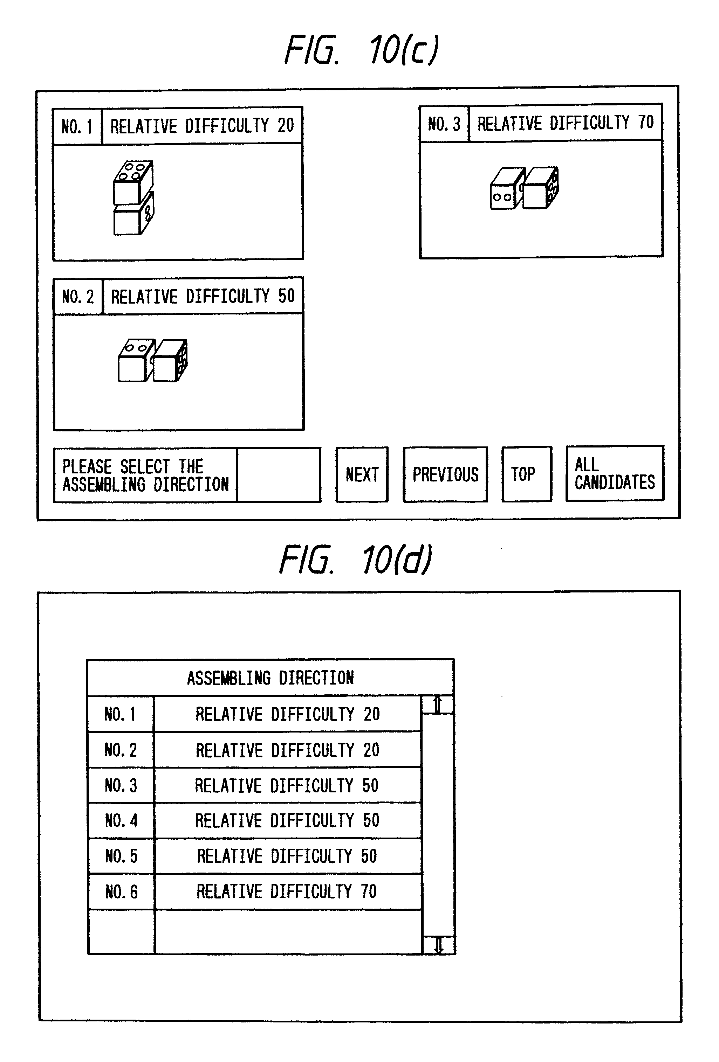

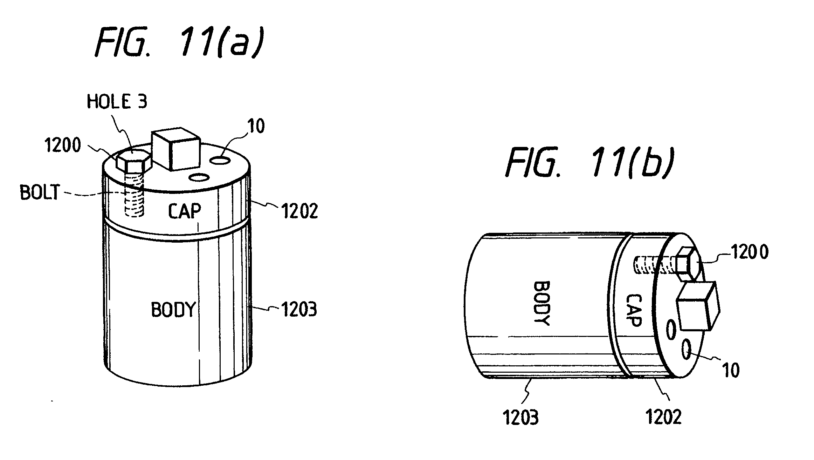

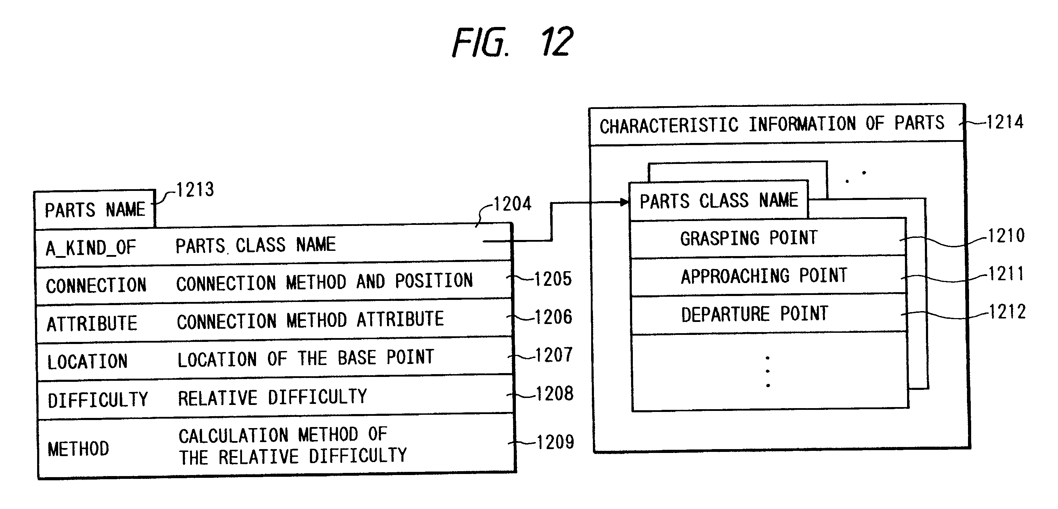

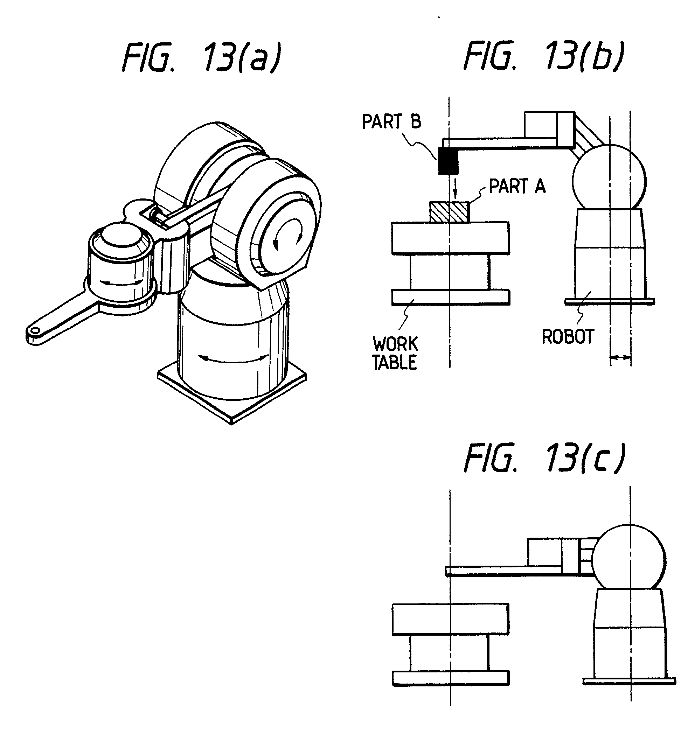

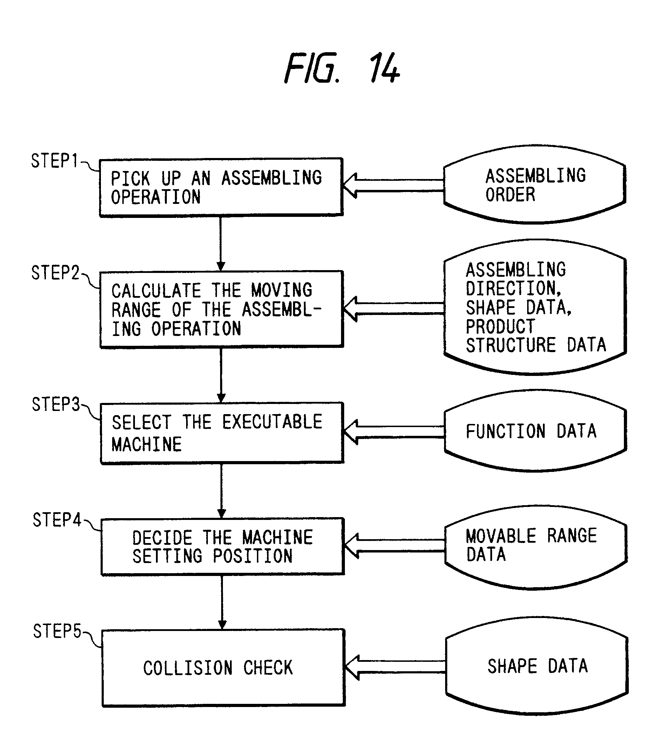

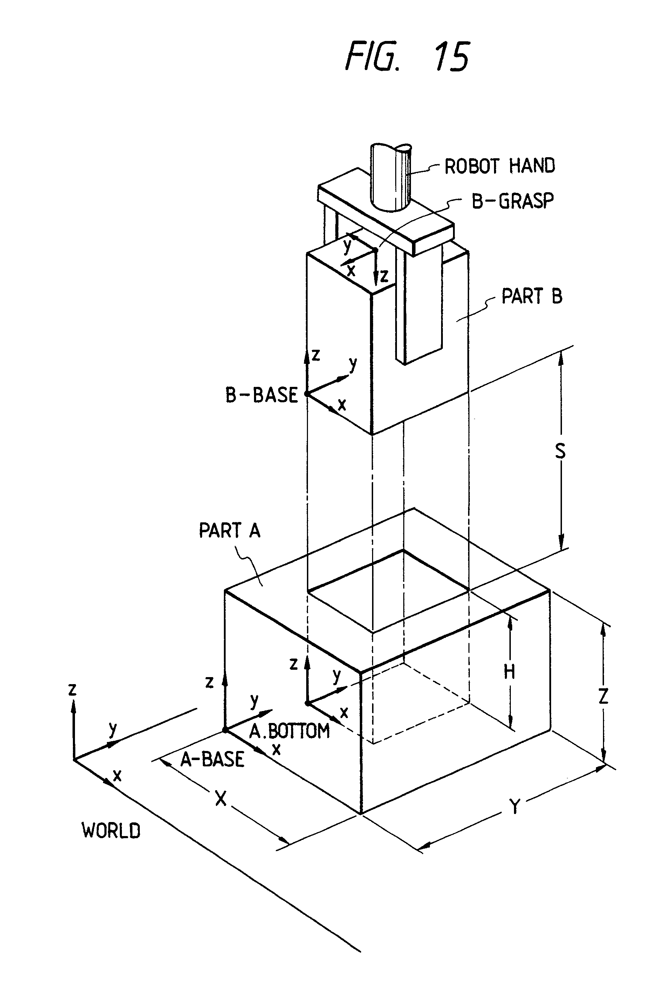

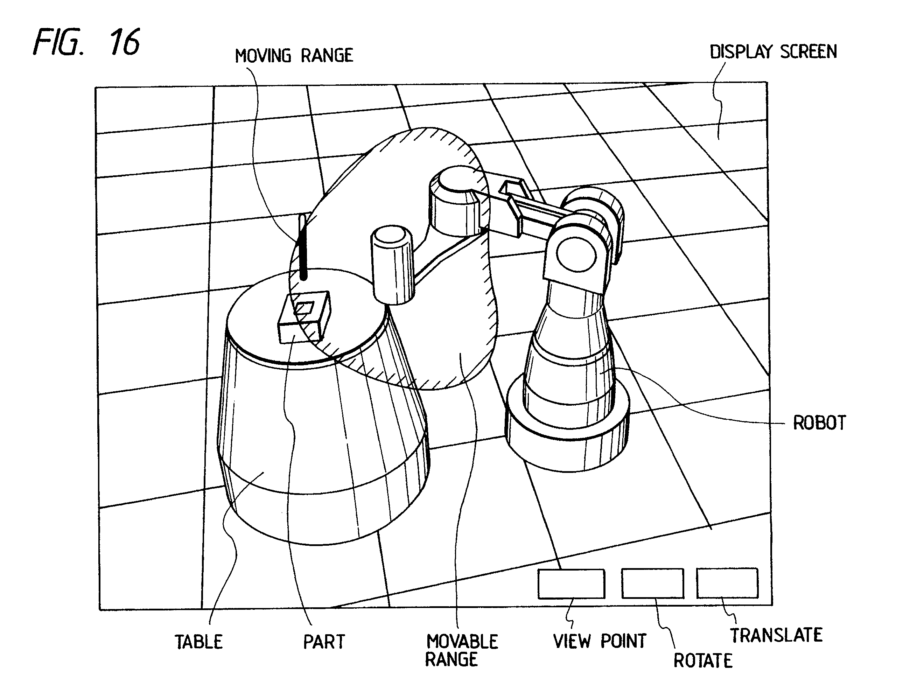

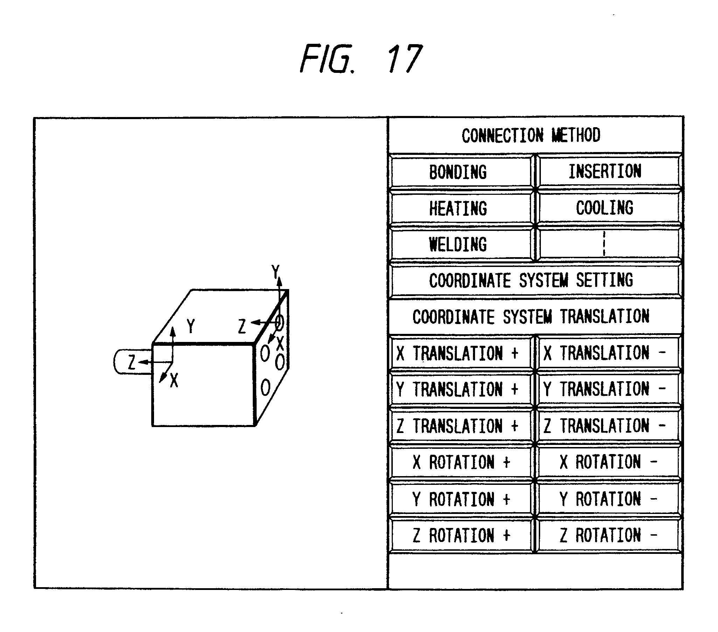

Figure 1 is a block diagram of an embodiment of the present invention. Figure 2 is a diagram showing an example of assembling direction of assembled parts. Figure 3 illustrates the parts to a model airplane, which is comprised of six parts including nose, wing, front body, rear body, horizontal stabilizer and vertical stabilizer, and a completed view after those parts are assembled. Figure 4 gives an example of assembling order of a model airplane comprised of six parts. Figure 5 (a) and 5 (b) show the positional relation between the coordinate of characteristic points of Parts A and Parts B and the world coordinate. Figure 6 (a) and 6 (b) express the relative positional relation between the two assembling parts by using characteristic point coordinate. Figure 7 shows the judgment flag of characteristic point for assembling parts. Figure 8 is a flow diagram for determining the direction of assembly. Figure 9 shows the difficulty of each assembling direction. Figure 10 (a) through 10 (d) show the screens displayed according to means of display. Figure 11 (a) and 11 (b) give examples of assembling direction for a product comprised of four parts including a bolt, a hole, a cap and a body. Figure 12 shows the classification of parts attributes. Figure 13 shows the robot used in assembly. Figure 14 is a flow diagram for determining the layout of assembly machines. Figure 15 shows necessary moving distance of the robot for assembly. Figure 16 shows the moving range of the robot. Figure 17 shows the display screen of the subsystem which prepares the parts configuration data used in the present invention.

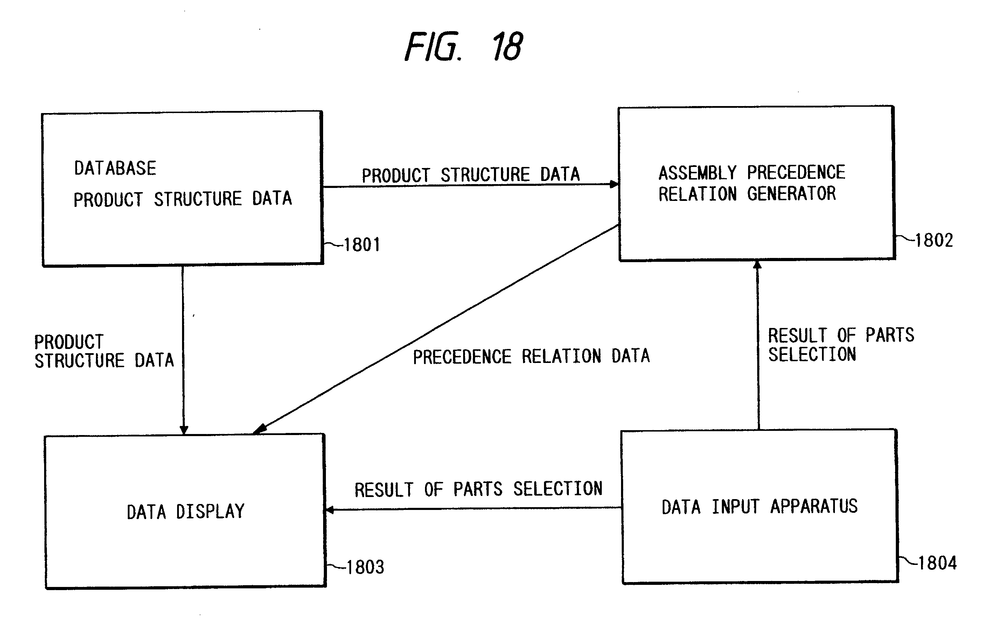

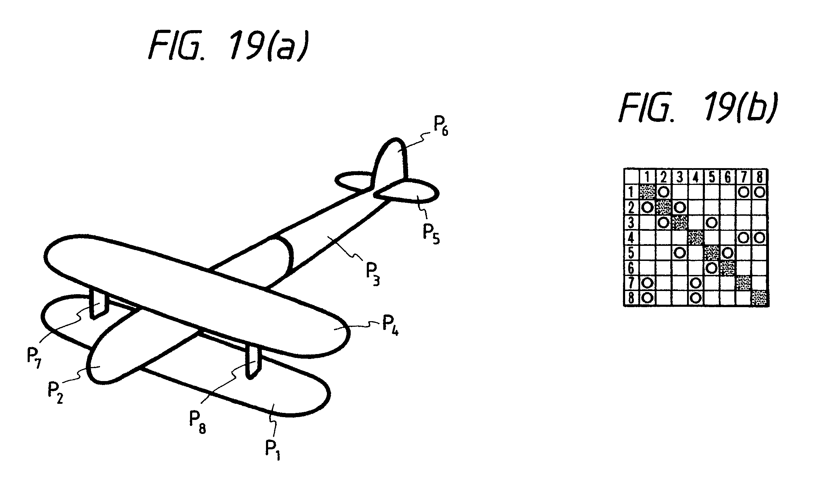

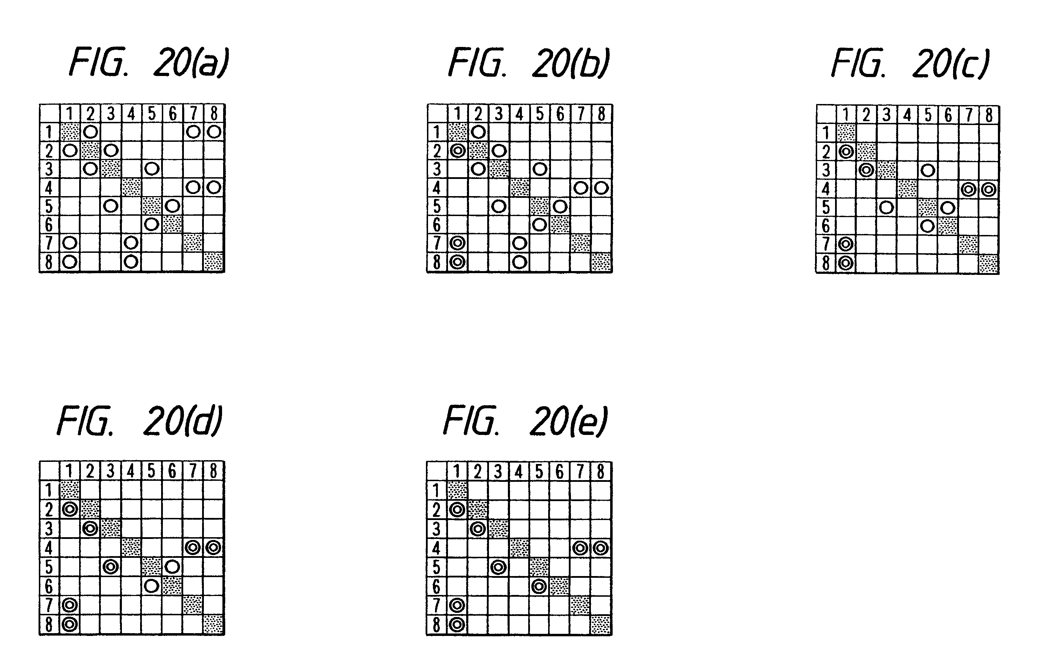

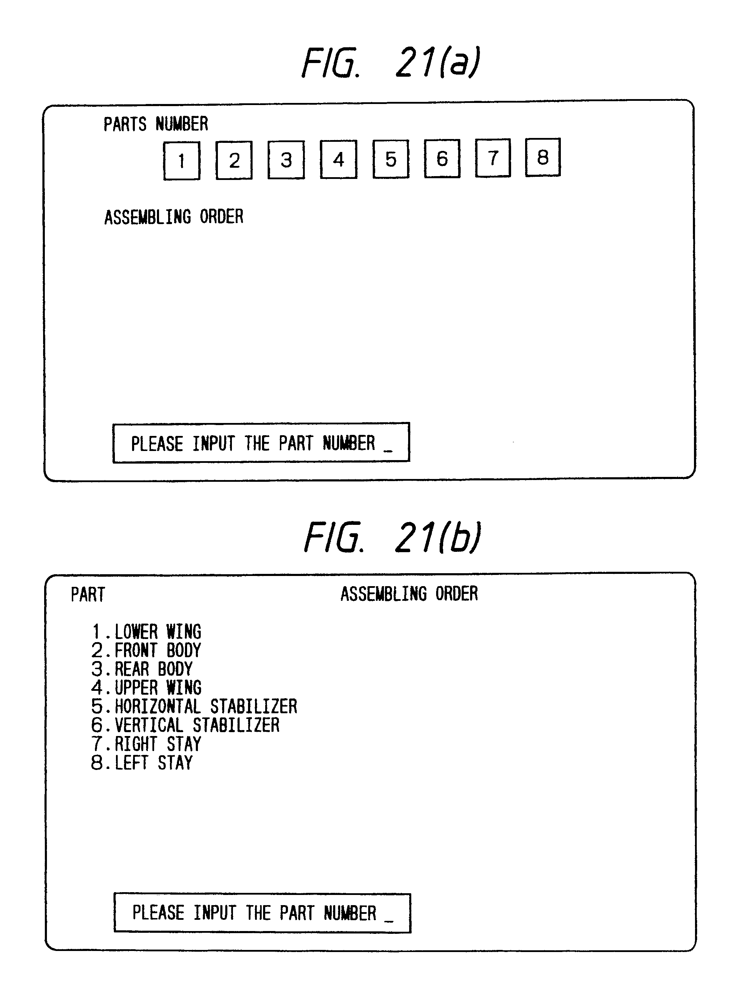

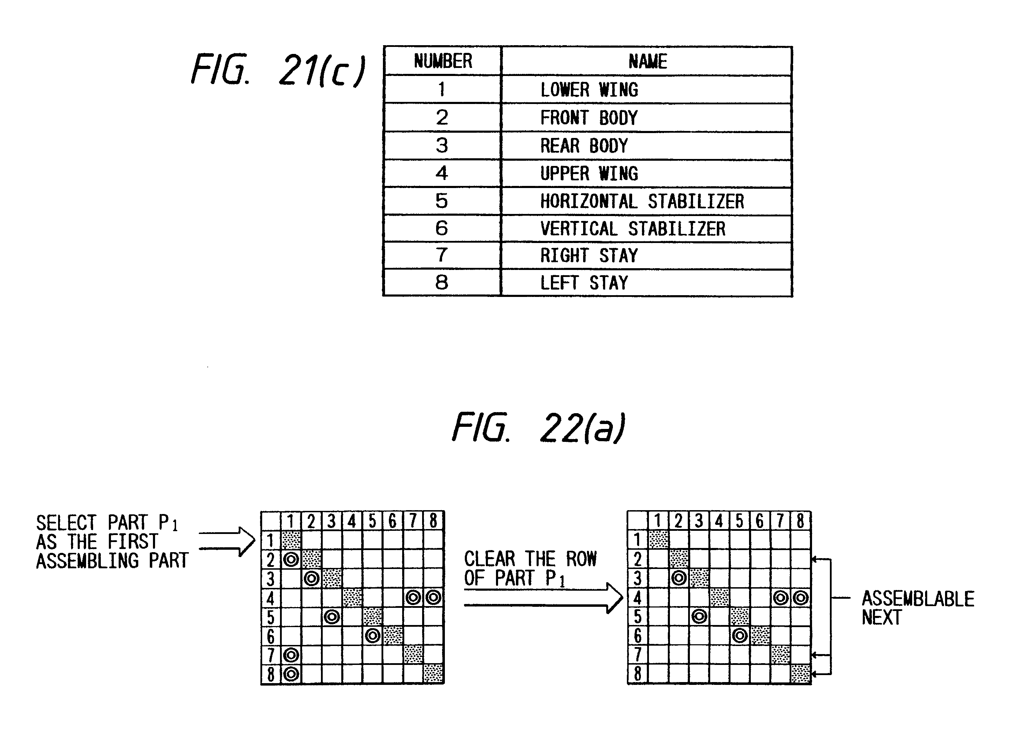

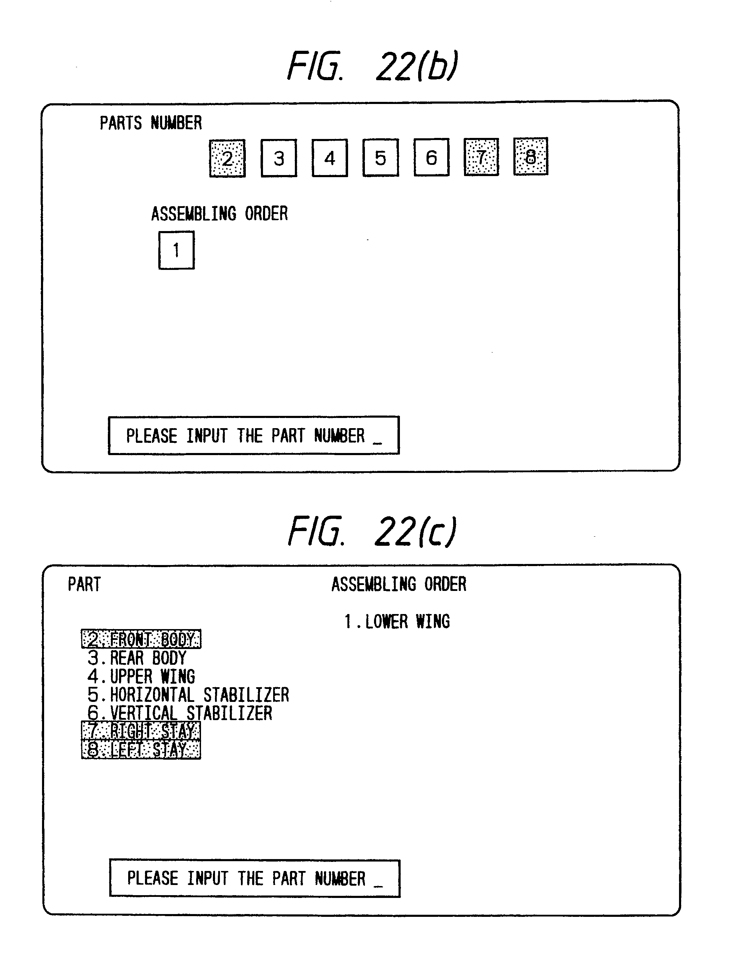

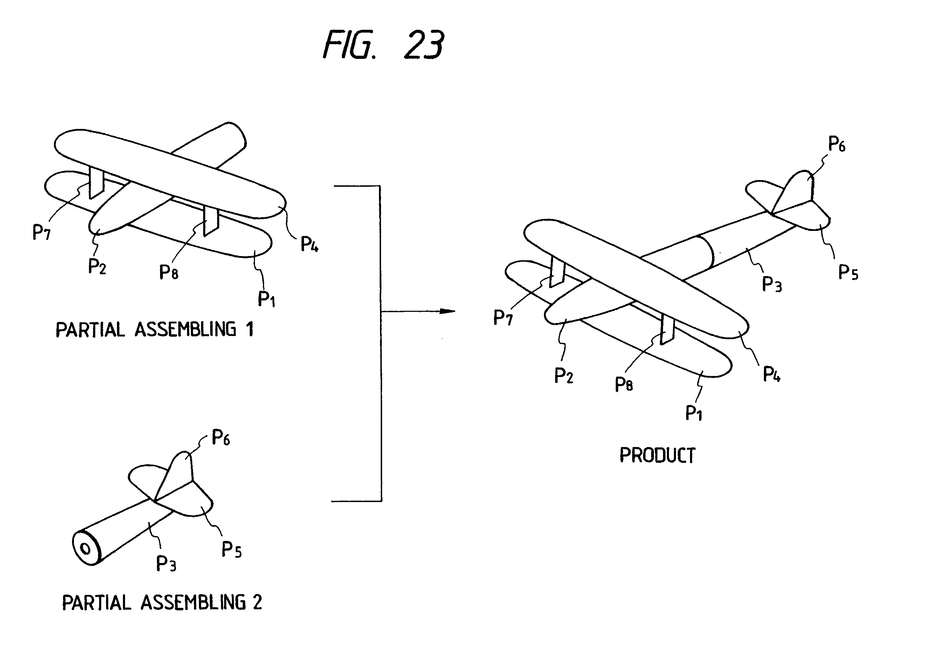

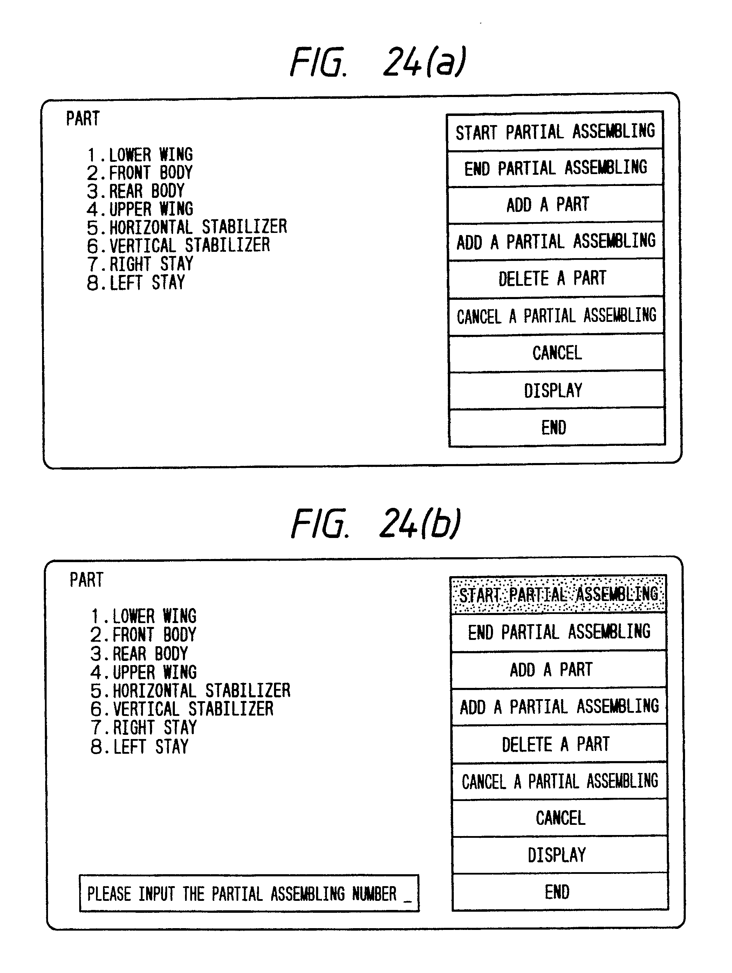

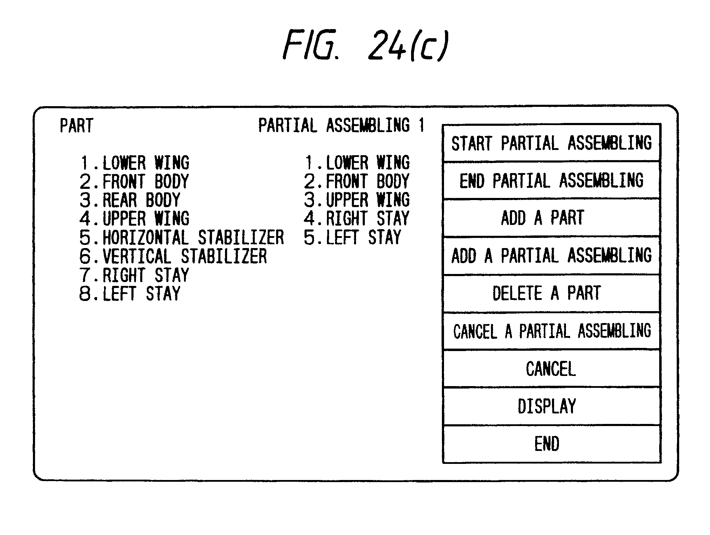

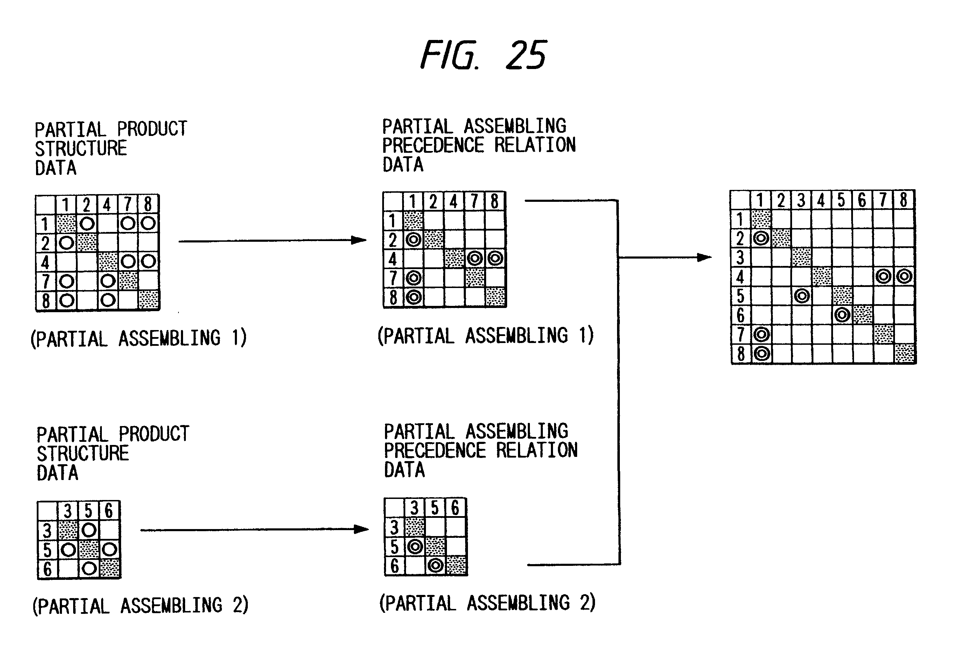

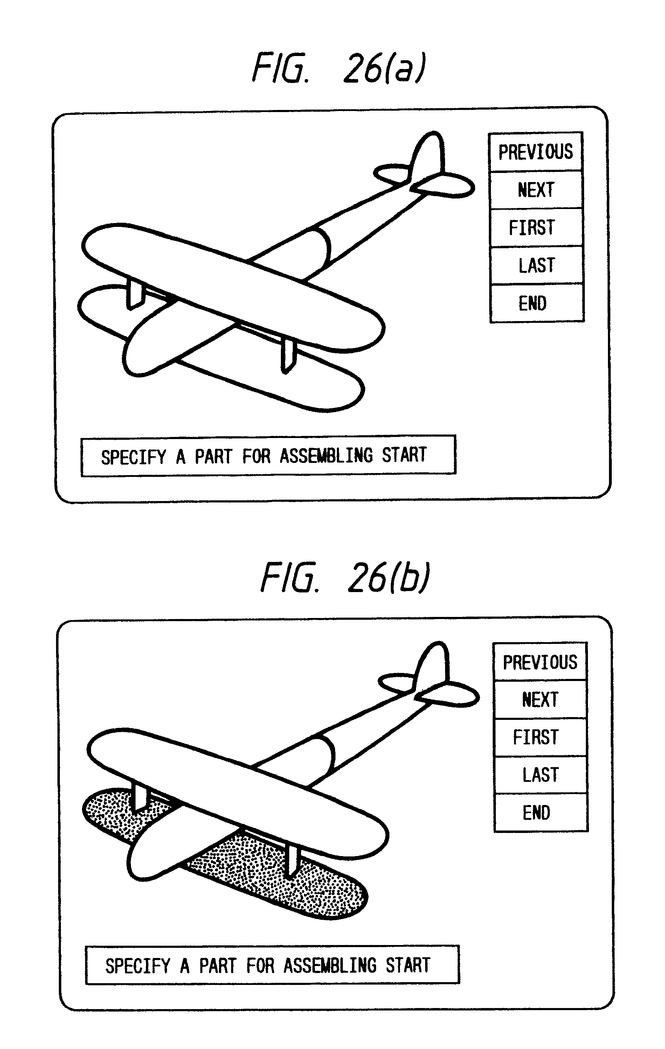

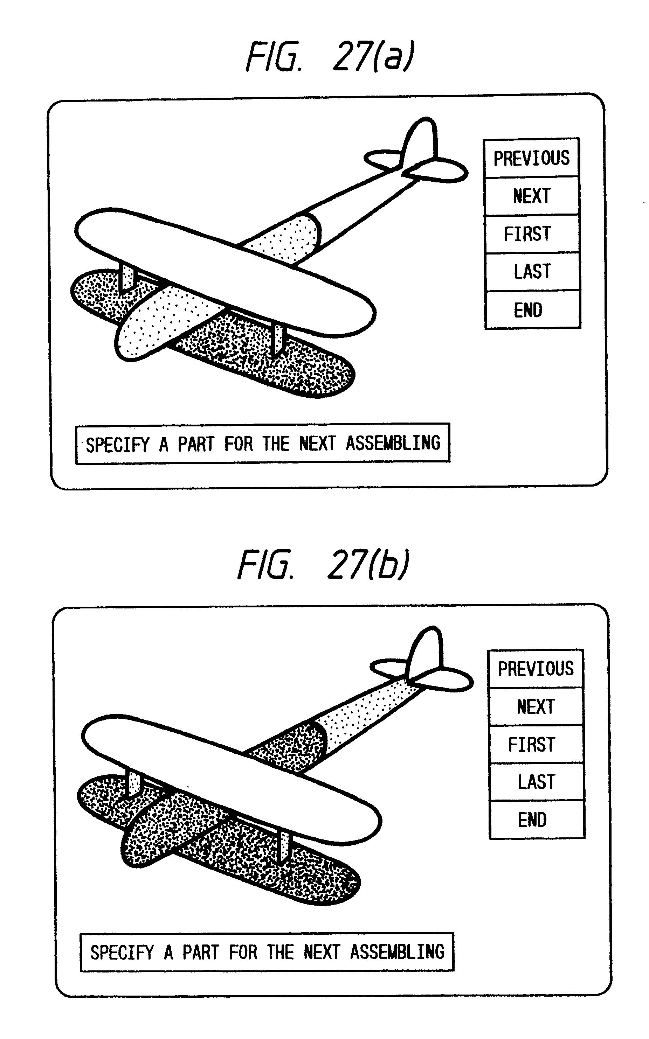

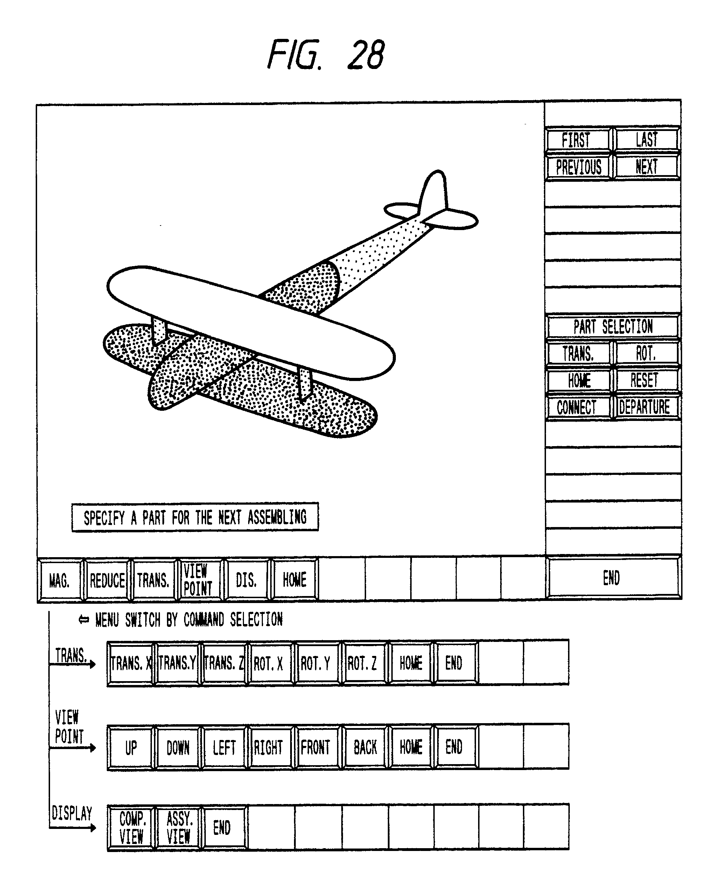

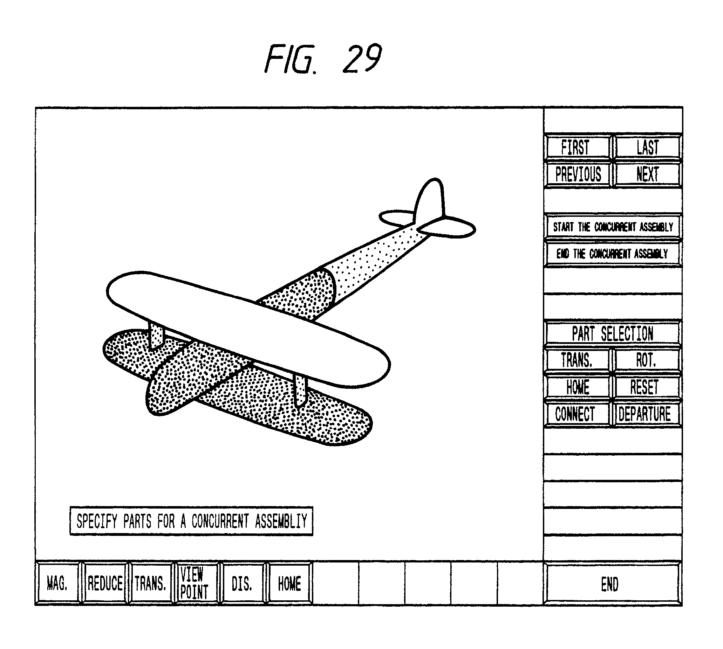

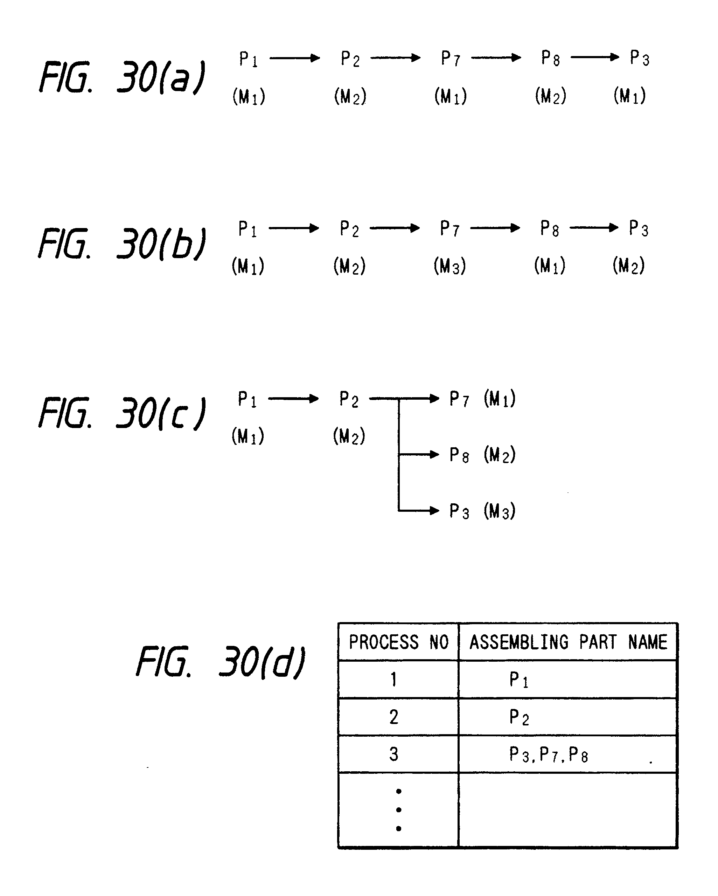

Figure 18 is a diagram showing the block structure of an example of assembling order determination system concerning the present invention. Figure 19 (a) and 19 (b) show a model airplane as an example of products that can be assembled and its product structure data. Figure 20 (a) through 20 (e) show examples of procedure for generating assembly precedence relation data from the product structure data. Figure 21 (a) through 21 (c) are diagrams for explaining the examples of selection input procedure of assembling parts in the first assembly process. Figure 22 (a) through 22 (c) are diagrams for explaining the procedure in determining the assembling order using assembly precedence relation data. Figure 23 is a diagram showing a case where a model airplane is assembled in such a way that it will include partial assembly. Figure 24 (a) through 24 (c) is a diagram showing examples of display screens for instructing parts assembly. Figure 25 is a diagram showing examples of generating procedure for assembly precedence relation data including partial assembly. Figure 26 (a) and 26 (b) are diagrams for explaining examples of selection input procedure for assembling parts in the first assembly process through application of graphics. Figure 27 (a) and 27 (b) are diagrams for explaining examples of assembling order determination procedure through application of graphics. Figure 28 is a diagram for explaining examples of assembling order determination procedure through application of graphics that are allegedly capable of various displays. Figure 29 is diagram showing examples of display screen at the time of instructing simultaneous assembly. Figure 30 (a) through 30 (d) are diagrams for explaining the relation between assembling order and selection of machines used in assembly.

DETAILED DESCRIPTION OF THE PREFERRED EMBODIMENTS

The present invention is explained in detail using the two embodiments described in the following.

[The first embodiment]

The first embodiment mainly achieves the aforementioned first object in an effective manner.

The first embodiment of the present invention will be explained in the following by using diagrams in Figure 1 through Figure 10.

As an example of assembly work, an assembly of a model airplane comprised of six parts, i.e. nose 108, wing 109, front body 110, rear body 111, horizontal stabilizer 112 and vertical stabilizer 113, and constitutes the completion diagram in Figure 3 when completed will be considered.

The assembling method of this airplane is shown in Figure 4 (a) and 4 (b). In Figure 4 (a), an example of assembling parts one by one in order by using a robot is shown. In other words, assembly is performed in the order of (wing 109) - (front body 110) - (rear body 111) - (horizontal stabilizer 112) - (vertical stabilizer 113) - (nose 108).

Further, in Figure 4 (b), an example of assembling in the order of (wing 109) - (nose 108 - front body 110 - rear body 111) - (horizontal stabilizer 112) - (vertical stabilizer 113) is shown.

Whereas, the assembling order will be:

(i) Place the wing with robot 114

(ii) Robot 116 assembles nose 108 and robot 117 assembles rear body 111 at the same time to the front body 110 held by robot 115

(iii) Robot 115, which is holding front body 110, attaches (nose 108 - front body 110 - rear body 111) which was assembled in (ii) to wing 109.

(iv) Robot 116 attaches horizontal stabilizer 112 to rear body 111.

(v) Robot 117 attaches vertical stabilizer 113 to horizontal stabilizer 112.

Further, various methods other than those shown in Figure 4 (a) and 4 (b) are conceivable by changing the assembling direction of respective assembling parts. To select assembling direction suited to actual work, the characteristics data of parts stored in parts data 6 which will be described later by using Figure 1, the positional relation data between parts stored in product data 15 and assemblability knowledge 10 will be used.

Let us take a look at parts A and B shown in Figure 2 to show the method for determining the assembling direction. Parts A has three holes from 101 to 103 while Parts B has four holes from 104 to 107 and a rod 108.

The assemblability knowledge shown below will be used to determine the assembling direction of such parts A and B. As an example of assemblability knowledge, it is said in a method generally known as assemblability evaluation method (Refer to pp.38-59, Nikkei Mechanical, March 21, 1988) that the work in which parts are assembled from bottom up is the easiest.

In this example, a method for automatically determining assembling direction of a product will be shown according to this knowledge that "assembling parts from bottom up is the easiest way."

In Figure 2 (a) and 2 (b), the total number of assembling direction ($\downarrow$: from top down, $\llcorner$: horizontal) for Parts A alone will be as shown in Table 1.

Table 1

| Assembling direction | ↓ | L↳ |
|---|---|---|
| Assembling direction 1 | 2 | 1 |
| Assembling direction 2 | 1 | 2 |

As can be clearly seen in Table 1, there is more top-down assembly work in assembling direction 1. Therefore, assemblability is better when assembling direction 1 is adopted for Parts A alone.

As shown in Figure 2 (c) and 2 (d), however, the total number of assembling direction (↓ from top down, L↳: horizontal) when assembling parts are comprised of Parts A and Parts B will be as shown in Table 2.

Table 2

| Assembling direction | ↓ | L↳ |
|---|---|---|
| Assembling direction 3 | 2 | 5 |
| Assembling direction 4 | 5 | 2 |

Therefore, the assembling direction for Parts A shown in assembling method 1 will not always be ideal.

For instance, assembling methods for Parts A and Parts B include directions shown in Figure 2 (c) and 2 (d) (assembling directions 3 and 4). Assembling direction 3 attempts to insert rod 108 of Parts B to Parts A from the side. Meanwhile, assembling direction 4 tries to insert rod 108 of Parts B from the top.

Adding up each assembling direction for assembling directions 3 and 4 will result in the figures in Table 2 above. Applying the assemblability judgment standard which says that "assembling parts from bottom up is the easiest way," the conclusion is that assembling direction 4 would be easier to assembly than assembling direction 3 for the product as a whole.

Thus, it is necessary to obtain the total number of assembling directions with regard to characteristic points of each parts such as holes and rods in an assembled state when determining the optimum assembling direction for the product as a whole.

To perform such operation automatically, the present invention will use the coordinate system data which will show the positions of holes and rods for respective parts as shown in Figure 5 as characteristic data of parts.

In other words, the position of standard coordinate system base for the parts will be shown by position vector of the parts' standard coordinate system base in world coordinate, while the attitude of standard coordinate system base for the parts is shown in third-degree rotation determinants between the world coordinate and the standard coordinate system base for the parts. As for internal expression, a 4 x 4 determinant that puts the two together will be used. In addition, it is expressed by the position vector of the parts' characteristic point (holes 101, 102, 103 and rod 108) in relation to the parts' standard coordinate system base, while the attitude of the parts' characteristic point will be expressed by the attitude of the parts' characteristic point and by third-degree rotation determinant of the parts' standard coordinate system base.

In Figure 5 (a), A_Hole -1 - A_Hole 3 is a coordinate system expressing the position and attitude of holes in relation to the standard coordinate system A_Base of Parts A. Similarly, A_Base also expresses the standard position and attitude of Parts A in relation to the world coordinate system. If the original position vector of A_Hole 1 in relation to A_Base were P and unit vector of A_Hole 1 in the direction of X, Y, Z were L, M, N, for instance, these data will be:

$$A\_Hole1 = \begin{bmatrix} Lx & Mx & Nx & Px \\ Ly & My & Ny & Py \\ Lz & Mz & Nz & Pz \\ 0 & 0 & 0 & 1 \end{bmatrix}$$

Whereas,

$$L = \begin{bmatrix} Lx \\ Ly \\ Lz \end{bmatrix}, \quad M = \begin{bmatrix} Mx \\ My \\ Mz \end{bmatrix}, \quad N = \begin{bmatrix} Nx \\ Ny \\ Nz \end{bmatrix}, \quad P = \begin{bmatrix} Px \\ Py \\ Pz \end{bmatrix}$$

Similarly, the position of the standard coordinate system of the parts can be expressed by the parts' position vector of standard coordinate system B_Base in relation to the world coordinate system and the attitude of the parts' standard coordinate system can be expressed by the third-degree rotation determinant between the world coordinate and the parts' standard coordinate system. The relation of connection between these data can be expressed as in Figure 5 (b).

Further, a product comprised of Parts A and Parts B is shown in Figure 6 (a). The positional relation data between parts in this product can be expressed as Figure 6 (b) by using the expression in Figure 5 (b).

Here, the Z axis direction of each characteristic point coordinate system shall be set to coincide with the assembling direction. In other words, using Parts A in Figure 5 (a) as an example, the Z axis of each coordinate system is set in downward direction because Parts B, which are the other parts on top of Parts A expressed as A_Hole 1 and A_Hole 2, are inserted from top to bottom. In addition, rod 108 of Parts B is set from right to left in the diagram with regard to the hole on the right surface of Parts A which is expressed as A_Hole 3. By doing so, it will be possible to count how many assemblies need to be performed for each direction for the whole product by looking at the direction of Z axis of each characteristic point for Parts A and Parts B, regardless of the position at which the product created by combining Parts A and Parts B shown in Figure 6 (a) is placed.

In other words, the assembling direction of a product can be determined according to the following procedure:

(i) The coordinate system of each parts is expressed as relative coordinate from the standard coordinate system of each parts. Accordingly, the position and attitude of each characteristic point in relation to the world coordinate system can be obtained by multiplying the standard coordinate by relative coordinate conversion matrix of each characteristic point.

(ii) As shown in Figure 6 (b), the positional relation between respective parts that comprise a product is given by connecting the relative coordinate system of standard point and characteristic point of each parts through a tree structure. Therefore, it can be seen that the operation explained in 1 needs to performed with regard to the characteristic point coordinate of Parts A in relation to the standard coordinate system of Parts A in the tree structure (A_Hole 1 - A_Hole 3), the characteristic point coordinate of Parts B which is connected to the characteristic point of Parts A (B_Rod, B_Hole 1 - B_Hole 4) and the standard coordinate when Parts A is moved or rotated.

(iii) To examine various assembling directions as a product, perform the operation in (ii) for each 90 degree rotations of a product around the X axis of standard coordinate system for Parts A (i.e. examining 4 directions around the X axis), for instance, and add up the number of Z axes whose positive direction opposite of the Z axis in the world coordinate system for Z axes of each characteristic point that have been obtained as a result. Perform a similar operation for Y and Z axes of the standard coordinate system for Parts A.

(iv) Among the assembling directions that have been adopted as the result of operation in (iii), adopt the case that has the greatest number of Z axes for characteristic point that are facing the opposite direction of Z axis for the world coordinate as the assembling direction of a product.

Here, it becomes necessary to distinguish whether the coordinate system currently in question is from standard point or from characteristic point when counting the Z axis direction of the characteristic point at the operation in (iii). This problem can be solved by adding the data shown in Figure 7, for instance, to the parts characteristics data. The data shown in Figure 7 consists of the coordinate system name and a flag that indicates whether the coordinate is a standard coordinate or a characteristic coordinate (0: standard coordinate, 1: characteristic coordinate). Then the data in Figure 7 is used to judge whether the coordinate which is currently in question is a standard coordinate or a characteristic coordinate and checked for Z axis direction only when it is a characteristic coordinate.

The above procedure is shown in Figure 8. Each step in Figure 8 can be explained as follows:

Step (1001)

Select one assembling direction for a product. As mentioned previously, this means selecting one directions from a total of 64 directions which includes 90 degree rotation of a product around X axis of Parts A (4 directions), around Y axis (4 directions) and around Z axis (4 directions).

Step (1002)

Initialize the counter for downward assembling directions.

Step (1003)

Select one coordinate value by following the coordinate value tree. In the example shown in Figure 6 (b), selection starts from World and moves on in the order of A_Base, A_Hole 1 - A_Hole 3, B_Base, B_Rod, B Hole 1 - B_Hole 4. A_Base is selected if it came on this Step (1003) first, and A_Hole 1 is selected if it came on this Step (1003) by the judgment of Step (1008).

Step (1004)

Judge whether the selected coordinate is a characteristic coordinate or not. If A_Base of Figure 6 (b) is selected at Step (1003), for instance, the judgment flag for A_Base on the comparison table for coordinate system name and judgment flag is 0 (standard coordinate system). If the coordinate system selected in Step (1003) turns out to be a standard coordinate as a result of judgment at this Step (1004), go to Step (1008). If not, go to Step (1005).

Step (1005)

Obtain the value at the world coordinate system of the coordinate whose coordinate value was selected at Step (1003) through coordinate conversion.

Step (1006)

If the direction of Z axis for the coordinate whose value was selected in Step (1003) and put through coordinate conversion in Step (1005) is opposite of the direction of Z axis in the world coordinate system (downward in Figure 6 (a), go to Step (1007)). If not, go to Step (1008).

Step (1007)

Increment the counter for the number of downward assembling directions.

Step (1008)

Judge whether the processes from Step (1004) to Step (1007) have been performed for all coordinates that are subject to assembly (judgment is made by checking whether there is a coordinate at the bottom or right of the coordinate that is being judged in the tree structure of Figure 6 (b).) If there is an unprocessed coordinate system, go to Step (1003). If not, go to Step (1009).

Step (1009)

Stores the number of downward assembling directions which was counted between Step (1003) and Step (1008) in accordance with the assembling direction of the product selected in Step (1001).

Step (1010)

Judge whether judgment has been made for all assembling directions of the parts.

Step (1011)

Select the case with the largest number of downward assembling directions from respective assembling directions of the product.

The above has been an explanation of the assembling direction determination method as an assemblability knowledge using the only judgment criterion of "assembling parts from bottom up is the easiest way." As assemblability knowledge, however, it is possible to determine the relative difficulty in advance according to the assembling direction shown in Figure 9.

The data in Figure 9 has relative difficulty added to various types of assembling directions and indicates that assembly is easier he values are smaller.

As it is clear from Figure 8, it is possible in this embodiment to obtain the assembling direction for characteristic points of respective parts that comprise a product in relation to various assembling directions of the parts (e.g. in the direction of Z axis of the coordinate system which indicates a hole in the above example).

Accordingly, the total difficulty of assembly for various assembling directions of a product can be obtained by judging which type of assembling direction from the data in Figure 9 coincides with the assembling direction of characteristic point obtained in this manner through the operation method 1 shown in Figure 1 and adding up their relative difficulty. Further, the assembling direction of the parts can be determined by selecting the assembling direction with lowest relative difficulty.

The next explanation concerns interactive processing with the user. That is, the following cases are possible when the assembling direction of a product is determined according to the above operation.

(1) More than one solutions that have the same "top down assembling number" or differ in relative difficulties exist.

(2) The next best solution may be adopted due to reasons other than assembling direction, e.g. lack of machine that can perform the optional work.

In the present invention, an interactive system shown in Figure 10 (a) through 10 (d) will be used to cope with cases shown in (1) and (2) above.

Figure 10 (a) through 10 (d) show various examples of displays on the display apparatus screen, and the screens on (a) through (c) are comprised of display area for the candidate assembling direction, candidate number input area and menu for candidate switching. Specifically, the following displays are made possible:

(i) Display of candidates using three-dimensional configuration

(ii) Simultaneous display of data which supports the user's decision making such as relative difficulty

(iii) Display with priority such as in order of smaller relative difficulty

In addition, the menu for candidate switching has the following meanings:

Next : display the next candidate
Previous: display the previous candidate
Top : display the first candidate
All candidates: display all candidates

The display of candidates is switched by performing an operation such as picking up these menus with a mouse.

That is, display of candidates is switched in the following order by picking the menu for candidate switching on the screen by using a mouse:

(i) Data input apparatus sends the result of menu selection to operation apparatus 1.

(ii) Operation apparatus 1 prepares candidates of assembling direction by using parts data 6, product data 15, assemblability knowledge 10 and sends data for displaying them to display apparatus 2.

(iii) Display apparatus 2 displays the candidates that have been selected.

In addition, the candidate number input area is an area for selecting one candidate from those checked in the above manner. For instance, input the candidate number through keyboard 3 input.

By setting up display apparatus 2 and input apparatus 3 explained above, the user will be able to select a desirable candidate from several candidates in cases such as (1) and (2) above.

Figure 10 (a) through 10 provide the following display:

(a) Initial status display. Only one candidate that the system considers appropriate is displayed.

(b) When the candidate with the second highest priority is displayed after selecting the "Next" menu.

(c) When all candidates are displayed.

(d) When all candidates are displayed according to their priority and reason (relative difficulty). A three-dimensional configuration is displayed when selection is made on this table.

The above has been the method of determining the assembling direction of a product, and the results determined in this manner can also be applied to determination of optimum layout for assembling parts.

In other words, when considering an assembly work, it includes the work of bringing all the parts from places where they are laid out before they are assembled. And motions such as changing the attitude of parts for assembly and changing the way of holding them will be minimized when the direction of parts layout is same as the attitude of their assembly, thereby reducing the number of man-hour required for assembly. For this reason, the direction of each parts at the time of product assembly, which is obtained from the assembling direction of each parts in relation to the product assembly as layout (attitude) direction of parts, will be adopted.

In the above embodiment, a method of determining the assembling direction for products and parts by using assemblability knowledge has been shown.

When determining assembling direction, it is also possible to adopt the method of assembling from bottom up, starting from parts that are at the bottom, according to this assembling direction.

When actual assembly is considered, however, there are parts that need to be rotated or slid after inserting and those that need to be held at the time of assembly in addition to products that can be assembled by inserting parts in one direction or by simply gluing them on.

For instance, when performing an assembly shown in Figure 11, the bolt 1200 can be tightened after placing the cap 1202 on the body 1203 if assembly is performed in the direction shown in (a). If it is performed in the direction shown in (b), however, the body 1203 and the cap 1202 need to be held together when tightening the bolt 1200.

In order to determine the assembling order including the cases mentioned above, a product structure data as shown in Figure 12 which includes detailed attributes of assembly work (e.g. retention needed at the time of rotational assembly after insertion) in addition to coordinate value as parts data in Figure 1 will be necessary.

Each parts possesses a bundle of data indicated by parts name such as parts class name 1204, connection method and position 1205, connection method attribute 1206, location of the base point 1207, relative difficulty 1208 and calculation method of the relative difficulty 1209. In addition, characteristic data of certain parts can be obtained by referring to a group of data indicated by parts class name such as grasping point 1210, approaching point 1211 and departure point 1212 of characteristic information 1214.

For instance, assuming that the bundle of parts name class 1213 and characteristic information of parts 1214 are randomly stored inside database 16 of Figure 10, it would be sufficient if parts name class 1213 have the value representing the first address of the area in which characteristic information of parts 1214 is stored.

Among the above data, relative difficulty shows, for instance, the relative difficulty that was used at the time of determining assembling direction, and is renewed automatically by using the calculation method of the relative difficulty every time assembling direction is changed.

Product structure can be expressed by connecting these data on respective parts in the form of a tree structure shown in Figure 5 (b) or Figure 6 (b).

The method of determining assembling direction by using the data on Figure 12 is shown in the following.

As for the method of utilizing connection method attribute, if it is necessary to rotate or slide after inserting, for instance, add high relative difficulty in relative difficulty calculation. Here, as in the embodiment shown when determining the assembling direction of a product and that of parts in relation to the product, relative difficulty calculation is synonymous to; 1) calculation of total number of assembling direction from top down, and 2) addition of relative difficulty set for each type of assembling direction. However, more detailed judgment is made possible by taking the connection method attribute into consideration.

The method of determining the assembling order that allows for detailed attributes of assembly work of parts was shown in the above embodiment that takes assembly movement of parts into consideration. When parts collision and movable range of machines are considered, more detailed examination will be necessary to obtain a practical assembling order.

For instance, a case where assembly work shown in Figure 13 (b) is performed with a robot shown in Figure 13 (a) will be shown here. In this example, the movable range of the robot itself as shown in Figure 13 (c) is that the tip of its hand will reach the center of the work table but the tip of hand reaching the table alone is not sufficient when performing the actual assembly.

In other words, when attempting to insert Parts B to Parts A as shown in (b), the tip of the hand needs to make a linear movement in the range shown by an arrow, which requires the robot to be placed at the position indicated by (b).

Thus, checking the possibility of assembly requires functional data of the machine used 7 (e.g. whether the machine can perform linear movement), tool function data 8, peripheral environment function data 9 (e.g. movable range of the robot), movable range data of the machine used 7, movable range data of the tools 8, movable range data of the peripheral environment 9, as well as parts data 6, data on the machine used 7, tool data 8 and configuration data of the peripheral environment 9 for checking collision will be required.

The procedure for checking the feasibility of assembling order that can be obtained from the above embodiment is shown in Figure 14.

Each step in Figure 14 is explained in the following.

⟨Step 1⟩

Using database 16 shown in Figure 1, assembling direction and assembling movement are determined according to the method shown in Figure 8 through operation apparatus 1 and an assembly work is selected.

⟨Step 2⟩

To calculate the moving range of assembly work, functional data of the machine used 7 (e.g. whether the machine can perform linear movement), tool function data 8, peripheral environment function data 9 (e.g. movable range of the robot), movable range data of the machine used 7, movable range data of the tools 8, movable range data of the peripheral environment 9, as well as parts data 6, data on the machine used 7, tool data 8 and configuration data of the peripheral environment 9 for checking collision will be used. Here, the moving range refers to the range shown by an arrow in Figure 13 (b), and can be obtained through methods shown below, for instance.

Now, the details of parts insertion work as in Figure 13 (b) will be shown in Figure 15.

X, Y and Z represent configurational dimensions of each parts of Parts A.

S shows the distance just before assembling Parts A and Parts B while A__Base and B__Base represent the standard coordinate of Parts A and Parts B, A__Bottom the characteristic coordinate of the hole portion of Parts and B__Grasp the grasping point of Parts B.

It can be seen that, in order to insert Parts B to Parts A in such a case, all that is necessary is to move for a distance of $(S+H)$ in the negative direction of the Z axis of the world coordinate system from the positional and attitudinal relation as shown by A__Bottom and B__Base in the world coordinate system obtained from the product structure data.

⟨Step 3⟩

For instance, select the machine and tools that are capable of performing the work obtained in ⟨Step 2⟩ according to data stored in machine selection knowledge 11 and tool selection knowledge 12 by using function data from machine data 7 and tool data 8 shown in Figure 1.

⟨Step 4⟩

Set up the machine at the location where the work obtained in ⟨Step 2⟩ will be executable according to machine layout knowledge 14 by employing the machine movable range data 7 and the tool movable range data 8 that have been selected.

⟨Step 5⟩

Check whether there is collision with other machines or peripheral environment at the location of installation determined in ⟨Step 4⟩ by reading out configuration data from parts data 6, data on machines used 7 and tool data 8 in accordance with machine layout knowledge 14.

Assembling order, machines and tools used and layout are determined by repeating the above operation for respective assembly work.

Several solutions may exist when selecting machines and tools in ⟨Step 3⟩ and determining the layout in ⟨Step 4⟩.

The possible method for selecting one solution from these several types of solutions would be to display the candidates and the information that supports the user's decision making on the display apparatus, as shown in Figure 10, so that the decision can be made through interactive processing. In selection of machines and tools, for instance, frequency of use and operation rate can be displayed along with candidate solutions to support the user's decision making.

Further, it is also possible to perform interactive processing by looking at the display apparatus screen, as shown in Figure 16, when determining the layout.

Figure 16 shows the assembly work that uses a robot. Here, a three-dimensional display of movable range and moving of the robot is shown in addition to the three-dimensional display of robot, table and parts. By looking at this screen, the user can change the position of the robot through the use of input apparatus such as mouse.

Once the robot's position is changed, the movable range is also moved accordingly.

By calculating the containment relation between movable range and moving range and changing the display method of the portion of moving range which is inside the movable range and outside the movable range (e.g. using change in color or luminance), it will be possible to check whether random assembly work can be performed at a random position of the robot.

The above method can be performed for each assembly work or by displaying the assembly section concerning the assembly work for the entire product at the same time.

In addition, the menu at the lower right of Figure 16 is for instructing change in viewpoint and rotation/translation of the diagram displayed, and can be used by pick-up operation using mouse.

The method using machine/tool selection knowledge and machine layout knowledge for automatic determination of machine/tool selection and layout will be shown in the following.

First, regarding system structure, store machine selection knowledge 11, tool selection knowledge 12 and machine layout knowledge 14 in database as shown in Figure 1.

In addition, create inference mechanism 4 for drawing inference by using this knowledge.

The processing procedure is same as that shown in Figure 14, but the above knowledge and inference mechanism 4 are used in ⟨Step 3⟩ and ⟨Step 4⟩ above.

In ⟨Step 3⟩, the moving range and functional data obtained in ⟨Step 2⟩ shall be regarded as inputs, and machines and tool to be used will be determined automatically by using knowledge concerning the number of times the machine is used, operation rate and number of times that columns are replaced.

In ⟨Step 4⟩, the moving range obtained in ⟨Step 2⟩ and the movable range data of machines and tools used determined in ⟨Step 3⟩ shall be regarded as inputs, and layout is determined automatically by using knowledge concerning distribution of movable range and time/distance of movement.

The characteristic data of parts used in the above explanation are created by inputting coordinate data on characteristic point of parts for the standard coordinate system of respective parts and assembly movement necessary for assembly at the time of determining the configuration of parts, by using the CAD system which is the higher rank system of this system.

Figure 17 displays the parts data sent from CAD shown in Figure 1, with respective menus having the following significance.

Coordinate system setting: Sets up and displays the coordinate system for portions picked up by selecting this menu after picking up the hole and rod portion of the parts that are displayed by using a mouse.

Coordinate system translation: Performs parallel and rotational translation of the coordinate system that has been set up by using ⟨X translation +⟩ -⟨Z rotation +⟩ menu.

Method of connection: Input the assembling method of hole and rod by selecting menu such as ⟨bonding⟩ and ⟨insertion⟩ after picking the hole or rod of the parts displayed.

By using the method of preparing characteristic data for these parts, it becomes possible to assemble in a most efficient manner by determining the assembling order in interactive style from several choices, taking machines used and peripheral environment into consideration.

As explained above, the present invention is capable of reducing the time required for assembly process design as it can automatically select assembling direction and assembling order with the best assemblability for parts and products from several choices.

In addition, it is capable of coping promptly with changes in product usage as it can determine the layout of the assembly machine to improve assemblability.

Furthermore, it is capable of selecting the parts desired by the user, assembling direction of product, assembling order and layout of assembly machine as it can display the solution calculated by the operation unit of this apparatus and make selections through the input unit at the time of determining assembling direction, assembling order and assembly machine.

[The Second Embodiment]

The following is an explanation of the second embodiment that effectively accomplishes the above objects from the second object to the eighth object, using figures from Figure 18 to Figure 30.

To first explain the assembling order determination system which concerns the present invention, Figure 18 is an example showing its block structure. Before explaining about this block structure, the explanation will first be made on the product structure data and assembly precedence relation data which are data subject to processing in this system. For instance, an assembly of a model airplane shown in Figure 19 (a) will be considered as an example of assembly work. As shown in the diagram, the model airplane is comprised of 8 parts from part P1 to part P8, and the connecting relation between these parts p1 to p8 is shown as product structure data in Figure 19 (b). Product structure data assume number from 1 to 8 for both lines and columns according to parts numbers of parts P1 to P8, and indicate the type of connecting relation between parts P1 to P8 by displaying a circle at the intersecting point of parts numbers of parts that have connecting relation to each other. As will be explained later, assembly precedence relation data is created based on this product structure data.

Going back to Figure 18 to explain about the system structure, the components of the system include database 1801 which stores the product structure data, assembly precedence relation generating apparatus 1802 which creates assembly precedence relation data from this product structure data and data input apparatus 1804 for selecting the data display apparatus which displays these product structure data and assembly precedence relation data. When determining the assembling order, the assembly precedence relation data is prepared from product structure data and then the assembling order is determined in an interactive manner by using assembly precedence relation data.

As for pre-processing in determining the assembly precedence relation, first the product structure data is sent from database 1801 to assembly precedence relation generating apparatus 1802 and to data display apparatus 1803. At data display apparatus 1803, the list of parts number is displayed according to this data, while the input of parts that need to be assembled first is requested on that display screen. Figure 21 (a) shows the display screen at this point. The display shown in Figure 21 (b) is also possible if the data of correspondence between parts number and parts name are stored in database 1 in the manner shown in Figure 21 (c), the display shown in 21 (b) will also be possible. If the parts that need to be assembled first is input by the user through data input apparatus 1804 when the list of parts number is displayed, assembly precedence relation data is generated automatically under the following procedure at the assembly precedence relation generating apparatus 1802 based on the results of that parts selection.

In other words, to explain using Figure 20 the case where part P1 has been selected as the part to be assembled first, all the circles that are on the line corresponding to part P1 are cleared from the product structure data (see Figure 20 (a)) in database 1801, while the processing results shown in Figure 20 (b) are obtained after all the circles that are on the column corresponding to part P1 are changed to double circles. As can be seen from this, the data on parts P2, P7 and P8 are affected from this processing, and they are the parts that are obtained as subjects of the next processing. The processing which is exactly the same as the one above will be performed for each of these affected parts P2, P7 and P8. In other words, all the circles on the lines corresponding to parts p2, P7 and P8 are cleared and all the circles that are on the columns corresponding to part P1 are changed to double circles. As a result of the above processing, the product structure data shown in Figure 20 (c) is generated. As can be seen from this, parts P8 and P4 are the parts that have been affected by processing concerning parts P2, P7 and P8. These are obtained as the subjects of the next processing, and the exact same processing as the one above will be performed for each of these affected parts P3 and P4. By repeating the same processing for the rest, product structure data will be renewed from the state shown in Figure 20 (c) to that in Figure 20 (d) and from the state shown in Figure 20 (d) to that in Figure 20 (e). However, the series of processing will be terminated when the product structure data shown in Figure 20 (e) is obtained because the parts that will be affected will cease to exist at this stage. The product structure data shown in Figure 20 (e) as a result of this series of final processing is what is obtained as the previously mentioned assembly precedence relation data. Incidentally, it indicates that in assembly precedence relation data, the parts that have line numbers can only be assembled after the parts with column numbers when there is a double circle at the intersection of line and column. To use the example of the double circle on the second line of the first column, it shows that part P2 can be assembled after part P1 is assembled.

Thus, the assembly precedence relation data is obtained. Meanwhile, the procedure for determining the assembling order by using this assembly precedence relation data can be explained as follows.

That is, the line on which a double circle does not exist is searched from the assembly precedence relation data. Using the example of assembly precedence relation data shown in Figure 22 (a) (which is identical to the data shown in Figure 20 (e)), the line for part P1 which had been selected first for assembly is the only line that does not have any double circle. Accordingly, as a result of selecting part P1 as the parts to be assembled first and clearing all double circles on the columns corresponding to part P1 in assembly precedence relation data, we know that parts P22, P7 and P8 can be assembled after part P1. The result of processing at this point, i.e. the next assembling parts (groups), will be displayed on the data display apparatus 3, but examples of display are as shown respectively in Figure 22 (b) and 22 (c). These examples of display correspond to displays shown in Figure 21 (a) and 21 (b), but, as shown in the diagram, the parts shown in mesh are displayed as parts that can be assembled next. Then, the user will select one of the parts from the assemblable parts that are display in this manner by using data input apparatus 1804. Based on the results of this parts selection, the new assemblable parts are obtained at assembly precedence relation generating apparatus 1802 by performing the above processing. Every time the assemblable parts are obtained, all that is required from the user is to select one and perform a similar processing. The series of assembling order determination processing will be terminated when assembling order is determined for all parts.

As shown above, the time required for assembly process design can be reduced significantly as assembly precedence relation can be generated automatically and the next assemblable parts are identified to the user.

Incidentally, the method for determining assembling order when a product is assembled without partial assembling. The reality of actual assembly work, however, is that products are generally assembled from several partial assembly parts. To explain the method for determining assembling order when partial assembling is involved in the following, a case shown in Figure 23 can be assumed here as an example of assembly work involving partial assembly. As shown in the diagram, partial assembling 1 and partial assembling 2 can be assembled independently from each other, with the model airplane which is the object product obtained by connecting partial assembling 1 (partial assembling comprised of parts P1, P2, P4, P7, P8) and partial assembling 2 (partial assembling comprised of parts P3, P5, P6) after completing their assembly.

As a method for specifying partial assembly, an examples of display screen in data display apparatus 1803 as shown in Figure 24 (a) to 24 (c) will be considered. First, the function of each command menu on the right side in the example of display screen shown in Figure 24 (a) is as follows.

Start partial assembling: A command menu for specifying commencement of parts registration to partial assembling. When this menu is input by data input apparatus 4 (e.g. mouse), the partial assembling number input instruction message as shown in Figure 24 (b) will be displayed. The registration of parts to partial assembling represented by input number is started after the partial assembling number is input in this state. Registration of parts to partial assembling is performed by successively selecting with data input apparatus 1804 the parts that are displayed to the left side of the examples on the display screen.

End partial assembling: A command menu for ending the registration of parts to partial assembling that was started in Start partial assembling menu. An example of display screen when registration of parts to partial assembling 1 is completed is shown in Figure 24 (c). When completion of partial assembling is specified, the product structure data shown in Figure 19 (b) is used to check whether partial assembling is possible. For instance, at partial assembling 1 in the example of display screen shown in Figure 24 (c), one can tell that partial assembling is possible from the fact that; 1) front body (2), right stay (7) and left stay (8) are connected to lower wing (1) and 2) upper wing is connected to right stay (7) or left stay (8) in the product structure data shown in Figure 19.

Add a part: A command menu for specifying an addition of a part to an existing partial assembling.

Add a partial assembling: A command menu for specifying an addition of all parts that are included in a separate partial assembling to an existing partial assembling.

Delete a part: A command menu for deleting a part from an existing partial assembling.

Delete a partial assembling: A command menu for deleting an existing partial assembling.

Cancel: A command menu for canceling the above processing and going back to the state before each command input.

Display: A command menu for displaying the number of designated partial assembling and names of parts that are included.

End: A command menu for ending the partial assembling specifying operation.

The procedure for creation of assembly precedence relation data when partial assembling 1 and 2 are specified according to the command menus and selective operation for parts described above can be explained using Figure 25 as follows.

That is, at assembly precedence relation generating apparatus 1802, partial product structure data is first created for both partial assembling 1 and 2 based on the partial assembly data from data input apparatus. Then the first assembling part is determined for both partial assembling 1 and 2 in the same manner as that shown in Figure 21. At assembly precedence relation generating apparatus 1804, partial assembling precedence relation data is prepared in the manner explained in Figure 20 according to partial product structure data and the first assembly parts data for both partial assembling 1 and 2, and assembly precedence relation data concerning partial assembling 1 and 2 are created by putting these together. It is obvious that this assembly precedence relation data is different from that shown in Figure 20 (e). Therefore, determination of assembling order will then become possible for a product including partial assembling 1 and 2 by following the same procedure as that explained Figure 22.

Incidentally, in the first example, for instance, the first selection of parts when determining assembling order and selection of parts from the second process onward are supposed to be performed through display/input apparatus as shown in Figure 21 and 22. As can be seen from these diagrams, however, mere display of parts numbers and parts names is not sufficient in giving an instant intuitional image of how the product is structured through an organic connecting relation between parts. This has given rise to a need to determine the assembling order by referring to drawings that can tell the product structure at a glance when trying to determine the assembling order through an interactive method, making the work of assembling order determination extremely troublesome. One of the ways to solve such a problem would be to store the configuration data of respective parts in database 1801 in advance and determine the assembling order at the same time as selecting parts from the display while overall configuration or partial configuration of a product is displayed using these configuration data. Figure 26 shows an example of display for selecting the first part from a three-dimensional model of a product. As shown in Figure 26 (a), the selection of the part to be assembled first is requested when a three-dimensional model of the product (a model airplane) is displayed on the data display apparatus by using configuration data of the part. While a three-dimensional model of the product is displayed, selection of a part is generally done by using a data input apparatus (e.g. mouse), picking parts to be selected on the display screen. As shown in Figure 26 (b), parts that have been selected in this manner can easily be distinguished from other parts by changing their color or luminance.

Moreover, examples of display for selection of parts from the second process onward corresponding to Figure 22 is shown in Figure 27. In the example of display, the following definition can be made with regard to the black portion, the meshed portion and the white portion.

The black portion: Parts whose assembling order has been determined.

The meshed portion: Parts that can be assembled next.

The white portion: Parts whose assembling order has been undetermined.

In addition, various functions of the command menu on the right side of the display are as follows.

Previous: Displays the status of the previous assembling order determination.

Next: Displays the status of the next assembling order determination.

First: Displays the status of the first assembling order determination.

Last: Displays the status of the last assembling order determination that has been determined up to now.

End: Completion of assembling order determination.

In the example of display shown in Figure 27 (a), the status in which part P1 has been selected as the part to be assembled first. As a result, part P1 is displayed as the black portion, parts P2, P7 and P8 as meshed portion and the remaining parts P3, P4, P5 and P6 as white portion. On the other hand, Figure 27 (b) shows the case where part P2 has been selected as the part to be assembled next in the display status shown in Figure 27 (a). As shown in Figure 27 (b), if, for instance, the "previous" command is input at the stage where assembling order has been determined up to parts P1 and P2, display status will return to Figure 27 (a). Meanwhile, display status will return to Figure 27 (b) if the "next" command is input when display status returns to Figure 27 (a). In addition, notwithstanding the above, display status will return to Figure 26 (a) if the "first" command is input at the stage where assembling order has been determined up to parts P1 and P2, and to Figure 27 (b) if the "last" command is input at the stage where display status has returned to Figure 26 (a). Moreover, if display status is returned to Figure 27 (a) at the stage where assembling order has been determined up to parts P1 and P2 as shown in Figure 27 (b) (i.e. stage where parts assembling order P1 - P2 has been determined) and a new part, e.g. part P7, is selected in this status, then the processing will continue under the assumption that the parts assembling order that had been determined up to that time (P1 - P2) was canceled and replaced by a new parts assembling order (P1 - P7).

As mentioned above, the usability in an interactive type assembling order determination system is improved as; 1) display of a three-dimensional model based on parts configuration data of a product, 2) determination of assembling order for respective parts followed by color-coded display according to assemblability and undermined assembling order, and 3) display of any status within the determined order and re-execution of order determination from any status through command menu, are made possible, thereby making it possible to significantly reduce the man-hour required in determining the order.

Although the three-dimensional models of products could only be displayed in fixed status and direction, three-dimensional models can be operated at will by creating a new command menu such as "magnify" (as shown in Figure 28) to for further improvement of usability. Incidentally, the functions of newly added command menus are as follows.

⟨Command menu on the lower side⟩

Magnify: Magnification of the entire portion displayed on the display screen.
Reduce: Reduction of the entire portion displayed on the display screen.
Translate: Parallel and rotational movement of the entire displayed portion on the display screen.
Viewpoint: Change of viewpoint for the entire displayed portion on the display screen.
Display: Switch of display between completed view and assembly view of a product.
Home: Returns changes such as magnify, reduce, translate and viewpoint to the initial state.

⟨Command menu on the right side⟩

Part selection: Specifies the part necessary for performing translation or rotation for a single part.
Translate: Parallel movement of a part specified in "Part selection."
Rotate: Rotational movement of a part specified in "Part selection."
Home: Returns changes specified in "Part selection" such as translate and rotate to the initial state.
Connect: Connects arbitrary parts together and makes them move as one batch at the time of "translate" and "rotate" operations.
Departure: Releases the above connection between arbitrary parts.
Reset: Releases the above connection between all parts.

In all of the examples shown above, assembling order is determined by selecting an arbitrary part from the group of parts that can be assembled next. In actual assembly, however, plural processes that are assemblable are performed concurrently in many cases. To explain about the assembling order determination method in which concurrent assembly of plural processes is said to be possible, Figure 29 shows an example of data display apparatus 1803 which is said to be capable of specifying this task. In Figure 29, two more command menus are added to those shown in Figure 28. These command menus have the following functions.

Start the concurrent assembly: Starts to specify the parts for a concurrent assembly.
End the concurrent assembly: Ends specifying the parts for a concurrent assembly.
Groups of parts that can specify concurrent assembly are those displayed in mesh in Figure 29.
In addition, concurrent assembly is specified according to the following procedure.
That is, after the selection is first made by picking the parts shown in mesh on the display screen when "Start the concurrent assembly" menu is selected, selecting "End concurrent assembly" will specify concurrent assembly.

Meanwhile, it is obvious that assembling order determined through various methods shown above will affect the selection of assembly machines that will execute each assembly process. Here, Figure 30 will be used to explain the relation between assembling order and machine selection. For instance, let us assume that there are three machines (M1, M2, M3) that are said to be capable of assembling respective parts for the model airplane, and that assembling order has been determined for parts P1, p2, P3, P7 and P8. If the assembling order is determined through a method that does not contain concurrent assembly, the assembling order of those parts will be determined, for instance, as P1 - P2 - P7 - P8 - P3. To allot machines M1, M2 and M3 to each assembly process, it will be in the form shown in Figure 30 (a) and 30 (b), for instance.

However, in a case in where the order is determined in such a way that parts P3, P7 and P8 are assembled concurrently after the parts assembly for P1 and P2 is performed as shown in Figure 30 (c), all machines M1, M2 and M3 will be used in the concurrent assembly process at that time. Therefore, to consider the effect of concurrent assembly shown above in the selection of machines after determining the assembling order, it is necessary to have the data on assembling order that can express concurrent assembly. Taking the assembling order shown in Figure 30 (c) as an example, what is required from its output of assembling order determination is to express concurrent assembly in the format shown in Figure 30 (c).

As explained above, this will allow for simple and prompt decision on the assembling order of respective parts which comprise the product in an interactive manner, be referring to drawings that have been prepared separately and without having to consider the assembly precedence relation. Moreover, they are capable of partial assembling and concurrent assembly in addition to being able to determine the assembling order of parts under favorable man-machine interface.

Other effects include being able to determine the assembling order of parts in a condition where the position of each part in a product is grasped easily and parts can be easily specified and selected. Furthermore, it has an effect of being able to know immediately whether the assembling order for each part has been determined and whether the next selection can be made, which makes it easy to grasp the position of each part in the product.

## Claims

1. An assembly process determining method comprising:
   a step of creating product structure data that indicates the connecting relation between parts according to the structure of each part concerning assembly;
   a step of determining a part involved in the above assembly; and
   a step of determining an assembly process for at least one part that can be assembled with the said determined part according to the above structure data.

2. An assembly process determining method according to claim 1, wherein said assembly process of at least one part determined is the assembling direction of the said part.

3. An assembly process determining method comprising:
   a step of creating coordinate data of characteristic point for each part involved in assembly and judgment criteria for relative difficulty of assembly; and
   a step of determining the assembling direction of parts involved in the above assembly according to the judgment criteria.

4. An assembly process determining method comprising:
   a step of obtaining configuration and characteristic point of parts involved in the said assembly as coordinate data in relation to the world coordinate system;
   a step of determining the assembling order of the parts according to the judgment criteria of easiness in assembly using the said coordinate data and assembling direction of the said parts concerning the above assembly which has been stored in advance;
   a step of calculating the relative difficulty of the said assembling order for the determined assembling direction; and
   a step of selecting one solution from the plural number of solutions when there are two or more solutions to the said calculated relative difficulty.

5. An assembly process determining method according to claim 4, wherein the above coordinate data is expressed by a determinant comprised of a position vector and a third degree rotation determinant.

6. An assembly process determining method according to claim 4, wherein the step of selecting the one solution above includes a step of displaying the relative difficulty calculated above.

7. An assembly process determining method among plural number of parts comprising:
   a step of obtaining the configuration and characteristic point of parts that are involved in the said assembly as coordinate data in relation to the world coordinate system; and
   a step of calculating the arrangement of above assembled equipment so that assemblability will be optimum according to the function and configurational information of the equipment which is assembling the said part, based on the said coordinate data and pre-stored judgment criteria which judges the easiness of assembly employing assembling direction and assembling movement of parts involved in

18

the above assembly.

8. An assembly process determining method according to claim 7, wherein the above coordinate data is expressed by a determinant comprised of a position vector and a third degree rotation determinant.

9. An assembly process determining method among plural number of parts comprising:
   a step of obtaining the configuration and characteristic point of parts that are involved in the said assembly as a determinant comprised of a position vector and a third degree rotation determinant;
   a step of obtaining the relative difficulty of assembly by the assembling direction of the said part based on coordinate data of characteristic point of the said part and the judgment criteria of relative difficulty in assembly;
   a step of calculating the assembling order that has good assemblability;
   a step of displaying the solution on the said calculated assembling order; and
   an input step of selecting one solution when there are two or more solutions displayed.

10. An assembly process determining method among plural number of parts comprising:
   a step of obtaining the configuration and characteristic point of parts that are involved in the said assembly as a determinant comprised of a position vector and a third degree rotation determinant;
   a step of calculating the layout of the above assembly equipment so that assemblability will be optimum based on the said coordinate data and the pre-stored judgment criteria which judges the easiness of assembly employing assembling direction and assembling movement of parts involved in the above assembly, and on function, configuration and pre-stored peripheral environment of the equipment that will assemble the said part;
   a step of displaying the solution to the calculated layout; and
   an input step of selecting one solution when there are two or more solutions displayed.

11. An assembly process determining method according to claim 10, wherein the function and configurational information of the above assembling equipment further include; tool selection knowledge which selects the tools that are appropriate for the said assembly work.

12. An assembly process determining method according to claim 10, wherein at least one of the following solutions will be displayed as the solution to the above layout;
   a display of candidates using three-dimensional configuration;
   a display which shows the relative difficulty according to the above assembling order;
   a display of the said relative difficulty; and
   a display which adds reasons to each display.

13. An assembly process determining method among plural number of parts comprising:
   a step of considering the CAD system that determines the configuration of each part as an upper rank system and receives the configurational data of the said part from the said CAD system;
   a step of obtaining the configuration and characteristic point of parts that are involved in the said assembly as coordinate data in relation to the world coordinate system;
   a step of obtaining the relative difficulty of assembly according to the judgment criteria which judges the easiness of assembly employing the said coordinate data and pre-stored assembling direction of parts involved in the above assembly, and to function, configuration and pre-stored peripheral environment of the equipment that will assemble the said part;
   a step of calculating the assembling order of parts according to the said relative difficulty as a solution;
   a step of displaying the solution to the said calculate;
   assembling order; and
   an input step of selecting one solution when the said solution displayed is more than one.

14. An assembly process determining method among plural number of parts comprising:
   a step of inputting information from at least one of the following as characteristic data, the CAD system that designs the said part as well as the configuration and characteristic point of parts that are involved in the above assembly as coordinate data expressed by position vector in relation to the world coordinate system and third degree rotation determinant, and position and connecting method of parts;
   a step of calculating the relative difficulty of the above part as a solution according to the pre-stored characteristic data of the above part and judgment criteria for relative difficulty of assembly; and an input step of selecting one solution when the said solution displayed is more than one.

15. An assembly process determining method according to claim 9, wherein the step of selecting one of the above solutions is the step of determining the above assembling order in an interactive style.

16. An assembly process determining method according to claim 10, wherein the step of selecting one of the above solutions is the step of determining the layout of the above equipment.

17. An assembly process determining method among plural number of parts comprising:
a step of setting up the part that can be assembled first among product structure data which indicates the connecting relation between the above plural parts; and
a step of determining the order of the said part that can be assembled first and the parts that can be assembled after the said first assembled part according to the above product structure data.

18. An assembly process determining method according to claim 17, further comprising:
a step of generating product-compatible assembly precedence relation data when controlling respective parts assembling order based on above parts assembled first and above structure data prior to determining the order of above parts.

19. An assembly process determining method according to claim 18, further comprising:
a step of displaying and designates the parts that determined the above order;
a step of renewing the said precedence relation data every time an instruction is given to display after the above precedence relation data is generated; and
a step of determining the assembling order of parts while generating and displaying the next assemblable part.

20. An assembly process determining method according to claim 18, further comprising:
a step of specifying the first assembled part in relation to the product structure data corresponding to each group when plural number of parts which comprise a product is divided into plural number of groups; and
a step in which the above precedence relation data is integrated into one for each above group as product-compatible assembly precedence relation data.

21. An assembly process determining method according to claim 19, further comprising:
a step of determining the assembling order of parts while allowing concurrent assembly by selecting assemblable parts on parts display screen when two or more assemblable parts exist after the above assembly precedence relation data is processed as renewable.

22. An assembly process determining method according to claim 19, further comprising:
a step of displaying the guidance needed for urging the next operation according to the progress of the above assembling order determination processing along with the above display instruction.

23. An assembly process determining method according to claim 19, further comprising:
a step of displaying a three-dimensional model of a product based on the parts-compatible configuration data which is pre-stored along with the said product structure data on the display screen; and
a step of specifying the parts by specifying the position of display for the said parts.

24. An assembly process determining method according to claim 19, further comprising:
a step of displaying three-dimensional models of parts whose assembling order has been determined, parts that are assemblable next and parts whose assembling order is undetermined on the display screen; and
a step of displaying each of the said parts in such a way that their form of display will be different from one another on the said display.

25. An assembly process determining method according to claim 23, wherein the above three-dimensional model of a product on the display screen can have its mode of display, including its size on the display as a whole, position of display, attitude and viewpoint, changed according to instructions from outside.

26. An assembly process determining system among plural number of parts comprising:
means for setting up the product structure data which shows the connecting relation between parts based on the structure of each part involved in assembly;
means for determining one part involved in the above assembly; and
means for determining the said part and at least one parts assembly process according to the said determined part and the above structure data.

27. An assembly process determining system among plural number of parts comprising:
means for setting up the coordinate data of characteristic point for each part involved in the said assembly and the judgment criteria for relative difficulty of assembly.

28. An assembly process determining system among plural number of parts comprising:
means for obtaining configuration and characteristic point parts involved in the said assembly as coordinate data in relation to the world coordinate system;
means for determining the assembling direction of the said parts according to the judgment criteria for easiness of assembly based on the said coordinate data and the above pre-stored assembling direction for parts involved in assembly;
means for calculating the relative difficulty of assembling order in the said assembling direction; and
means for selecting one solution from the sail plural number of solutions when there are plural number of solutions regarding the said relative difficulty which has been calculated.

29. An assembly process determining system among plural number of parts comprising:
means for obtaining configuration and characteristic point of parts involved in the said assembly as coordinate data in relation to the world coordinate system; and
means which, based on its function and configuration information, and according to the said coordinate data and the pre-stored judgment criteria for judging the easiness of assembly including assembling direction and assembly movement of parts that are involved in the above assembly, calculates the layout of the above equipment for assembling the said parts to optimize assemblability.

30. An assembly process determining system among plural number of parts comprising:
means for obtaining configuration and characteristic point of parts involved in the said assembly as coordinate data expressed by position vector in relation to the world coordinate system and third degree rotation determinant;
means for obtaining relative difficulty of assembly of the said parts by assembling direction according to the coordinate data of characteristic point for the said part and judgment criteria for assembly;
means for calculating a favorable assembling order as a solution based on the said relative difficulty, means for displaying the solution for the above calculated assembling order; and
input means for selecting one solution when the said solution displayed is more than one.

31. An assembly process determining system among plural number of parts comprising:
means for obtaining configuration and characteristic point of parts involved in the said assembly as coordinate data expressed by position vector in relation to the world coordinate system and third degree rotation determinant;
means which, based on its function, configuration information and pre-stored peripheral environment, and according to the said coordinate data and the pre-stored judgment criteria for judging the easiness of assembly including assembling direction and assembly movement of parts that are involved in the above assembly, calculates the layout of the above equipment for the assembling said parts to optimize assemblability;
means for displaying the solution for the above calculated assembling order; and
input means for selecting one solution when the said solution displayed is more than one.

32. An assembly process determining system among plural number of parts comprising:
means for considering the CAD system that determines the configuration of each part as an upper rank system and receives the configurational data of the said part from the said CAD system;

means for obtaining the configuration and characteristic point of parts that are involved in the said assembly as coordinate data in relation to the world coordinate system;

means for obtaining the relative difficulty of assembly according to the judgment criteria which judges the easiness of assembly employing the said coordinate data and pre-stored assembling direction of parts involved in the above assembly, and to function, configuration and pre-stored peripheral environment of the equipment that will assemble the said part;

means for calculating the assembling order of parts according to the said relative difficulty as a solution;

means for displaying the solution to the said calculated assembling order; and

input means for selecting one solution when the said solution displayed is more than one.

33. An assembly process determining system among plural number of parts comprising:

means for inputting information from at least one of the following as characteristic data, the CAD system that designs the said part as well as the configuration and characteristic point of parts that are involved in the above assembly as coordinate data expressed by position vector in relation to the world coordinate system and third degree rotation determinant, and position and connecting system of parts;

means for calculating the relative difficulty of the above part as a solution according to the pre-stored characteristic data of the above part and judgment criteria for relative difficulty of assembly; and

input means for selecting one solution when the said solution displayed is more than one.

34. An assembly process determining system among plural number of parts comprising:

means for setting up the first assembled part from the product structure data which indicates the connecting relation among the above pre-stored plural number of parts; and

means for determining the order of the parts that can be assembled after the said first assembled part according to the above product structure data.

## FIG. 1

SPECIFICATION DECISION SYSTEM

PROCESS PLANNING SYSTEM

2 — DISPLAY APPARATUS

DISPLAY PROCESS

PROCESSOR

∘RESULT DISPLAY

∘CANDIDATE DISPLAY

∘PRODUCTS, PARTS, LAYOUT, MACHINE -TOOL DATA DISPLAY

∘DESIGN ORDER
∘MENU SELECTION
∘NUMERICAL INPUT

3 — DATA INPUT APPARATUS

∘KEY INPUT
∘MOUSE HANDLING

USER

4 — INFERENCE MECHANISM

5 — PRODUCT SPECIFICATION

6 — PARTS DATA

MACHINE DATA — 7

TOOL DATA — 8

PERIPHERAL ENVIRONMENT DATA — 9

ASSEMBLABILITY KNOWLEDGE — 10

MACHINE SELECTION KNOWLEDGE — 11

TOOL SELECTION KNOWLEDGE — 12

PLANNING RESULTS — 13

MACHINE LAYOUT KNOWLEDGE — 14

PRODUCT DATA — 15

DATABASE

16

PRODUCTION SYSTEM

EP 0 452 944 A1

FIG. 2(a)

PART A

101, 102, 103

ASSEMBLING DIRECTION 1

FIG. 2(b)

PART A

103, 102, 101

ASSEMBLING DIRECTION 2

| ASSEMBLING DIRECTION | ↓ | ↳ |
|---|---|---|
| ASSEMBLING DIRECTION 1 | 2 | 1 |
| ASSEMBLING DIRECTION 2 | 1 | 2 |

FIG. 2(c)

PART A

101, 102, 103

PART B

105, 106, 107, 104, 108

ASSEMBLING DIRECTION 3

FIG. 2(d)

PART B

105, 106, 107, 104, 108

PART A

103, 102, 101

ASSEMBLING DIRECTION 4

| ASSEMBLING DIRECTION | ↓ | ↳ |
|---|---|---|
| ASSEMBLING DIRECTION 3 | 2 | 5 |
| ASSEMBLING DIRECTION 4 | 5 | 2 |

24

# FIG. 3

113 VERTICAL STABILIZER

112 HORIZONTAL STABILIZER

111 REAR BODY

110 FRONT BODY

108 NOSE

109 WING

COMPLETED VIEW

FIG. 4(a)

FIG. 4(b)

FIG. 5(a)

FIG. 5(b)

EP 0 452 944 A1

FIG. 6(a)

FIG. 6(b)

EP 0 452 944 A1

# FIG. 7

| COORDINATE SYSTEM NAME | JUDGEMENT FLAG |
|:---:|:---:|
| A _ BASE | 0 |
| A _ HOLE 1 | 1 |
| A _ HOLE 2 | 1 |
|  |  |

# FIG. 9

| ASSEMBLING DIRECTION | RELATIVE DIFFICULTY |
|:---:|:---:|
| ↓ | 0 |
| ↙ | 5 |
| → | 10 |
| ↑ | 15 |
| ↗ | 20 |
| ⋮ | ⋮ |

# FIG. 8

```
                    ( START )
                        │
                        ▼
        ┌───────────────────────────────┐
        │ SELECT AN ASSEMBLING DIRECTION │──1001
        │ OF THE PRODUCT                 │
        └───────────────────────────────┘
                        │
                        ▼
        ┌───────────────────────────────┐
        │         COUNT = 0             │──1002
        └───────────────────────────────┘
                        │
                        ▼
        ┌───────────────────────────────┐
        │ SELECT A COORDINATE VALUE TRACING │──1003
        │ THE TREE OF THE COORDINATE VALUES │
        └───────────────────────────────┘
                        │
                        ▼
  NO    ╱─────────────────────────────╲
 ◄──────┤  IS THE SELECTED COORDINATE  │──1004
        ╲  A CHARACTERISTIC COORDINATE ? ╱
                        │ YES
                        ▼
        ┌───────────────────────────────┐
        │ GET THE WORLD COORDINATE VALUE OF │──1005
        │ THE SELECTED COORDINATE BY A      │
        │ COORDINATE TRANSLATION            │
        └───────────────────────────────┘
                        │
                        ▼
        ╱─────────────────────────────╲
        │ IS THE Z AXIS DIRECTION OF   │──1006
        │ THE TRANSLATED COORDINATE REVERSE │
        │ TO THAT OF THE WORLD COORDINATE ? ╲
                        │ YES
                        ▼
        ┌───────────────────────────────┐
        │      COUNT = COUNT + 1        │──1007
        └───────────────────────────────┘
                        │
                        ▼
        ╱─────────────────────────────╲  NO
        │ TRANSLATED TO ALL THE        │─────►
        ╲ COORDINATE VALUES ?          ╱
                 1008   │ YES
                        ▼
        ┌───────────────────────────────┐
        │ STORE THE COUNT VALUE IN         │──1009
        │ CORRESPONDENCE TO THE CURRENT    │
        │ ASSEMBLING DIRECTION             │
        └───────────────────────────────┘
                        │
                        ▼
        ╱─────────────────────────────╲  NO
        │ EXECUTED TO ALL THE ASSEMBLING │─────►
        ╲ DIRECTIONS OF THE PRODUCT ?   ╱
                 1010   │ YES
                        ▼
        ┌───────────────────────────────┐
        │ SELECT THE ASSEMBLING DIRECTION OF │──1011
        │ THE MAXIMUM COUNT VALUE FROM EACH  │
        │ ASSEMBLING DIRECTION               │
        └───────────────────────────────┘
                        │
                        ▼
                    ( END )
```

## FIG. 10(a)

NO.1 | RELATIVE DIFFICULTY 20

PART B
PART A

DISPLAY OF THE CANDIDATE ASSEMBLING DIRECTION

CANDIDATE NO.INPUT AREA

MENU FOR CANDIDATES SWITCHING

PLEASE SELECT THE ASSEMBLING DIRECTION | | NEXT | PREVIOUS | TOP | ALL CANDIDATES

## FIG. 10(b)

NO.2 | RELATIVE DIFFICULTY 50

PART A    PART B

PLEASE SELECT THE ASSEMBLING DIRECTION | | NEXT | PREVIOUS | TOP | ALL CANDIDATES

# FIG. 10(c)

| NO. 1 | RELATIVE DIFFICULTY 20 |
|---|---|

| NO. 3 | RELATIVE DIFFICULTY 70 |
|---|---|

| NO. 2 | RELATIVE DIFFICULTY 50 |
|---|---|

| PLEASE SELECT THE ASSEMBLING DIRECTION | | NEXT | PREVIOUS | TOP | ALL CANDIDATES |
|---|---|---|---|---|---|

# FIG. 10(d)

| ASSEMBLING DIRECTION | |
|---|---|
| NO. 1 | RELATIVE DIFFICULTY 20 |
| NO. 2 | RELATIVE DIFFICULTY 20 |
| NO. 3 | RELATIVE DIFFICULTY 50 |
| NO. 4 | RELATIVE DIFFICULTY 50 |
| NO. 5 | RELATIVE DIFFICULTY 50 |
| NO. 6 | RELATIVE DIFFICULTY 70 |
| | |

FIG. 11(b)

CAP
BODY

1200
10
1202
1203

FIG. 11(a)

CAP
BODY

HOLE 3
1200
BOLT
10
1202
1203

## FIG. 12

| | |
|---|---|
| PARTS NAME ~1213 | |
| A_KIND_OF | PARTS CLASS NAME |
| CONNECTION | CONNECTION METHOD AND POSITION ~1205 |
| ATTRIBUTE | CONNECTION METHOD ATTRIBUTE ~1206 |
| LOCATION | LOCATION OF THE BASE POINT ~1207 |
| DIFFICULTY | RELATIVE DIFFICULTY ~1208 |
| METHOD | CALCULATION METHOD OF THE RELATIVE DIFFICULTY ~1209 |

~1204

CHARACTERISTIC INFORMATION OF PARTS ~1214

PARTS CLASS NAME

| | |
|---|---|
| GRASPING POINT | ~1210 |
| APPROACHING POINT | ~1211 |
| DEPARTURE POINT | ~1212 |

EP 0 452 944 A1

# FIG. 13(a)

# FIG. 13(b)

PART B

PART A

WORK
TABLE

ROBOT

# FIG. 13(c)

# FIG. 14

STEP1 — PICK UP AN ASSEMBLING OPERATION ← ASSEMBLING ORDER

STEP2 — CALCULATE THE MOVING RANGE OF THE ASSEMBLING OPERATION ← ASSEMBLING DIRECTION, SHAPE DATA, PRODUCT STRUCTURE DATA

STEP3 — SELECT THE EXECUTABLE MACHINE ← FUNCTION DATA

STEP4 — DECIDE THE MACHINE SETTING POSITION ← MOVABLE RANGE DATA

STEP5 — COLLISION CHECK ← SHAPE DATA

# FIG. 15

# FIG. 16

MOVING RANGE

DISPLAY SCREEN

ROBOT

TABLE

PART

MOVABLE
RANGE

VIEW POINT

ROTATE

TRANSLATE

EP 0 452 944 A1

# FIG. 17

| CONNECTION METHOD | |
|---|---|
| BONDING | INSERTION |
| HEATING | COOLING |
| WELDING | ¦ |
| COORDINATE SYSTEM SETTING | |
| COORDINATE SYSTEM TRANSLATION | |
| X TRANSLATION + | X TRANSLATION − |
| Y TRANSLATION + | Y TRANSLATION − |
| Z TRANSLATION + | Z TRANSLATION − |
| X ROTATION + | X ROTATION − |
| Y ROTATION + | Y ROTATION − |
| Z ROTATION + | Z ROTATION − |

## FIG. 18

DATABASE
PRODUCT STRUCTURE DATA
~1801

PRODUCT STRUCTURE DATA →

ASSEMBLY PRECEDENCE
RELATION GENERATOR
~1802

PRODUCT STRUCTURE DATA

PRECEDENCE RELATION DATA

RESULT OF PARTS SELECTION

DATA DISPLAY
~1803

RESULT OF PARTS SELECTION ←

DATA INPUT APPARATUS
~1804

EP 0 452 944 A1

FIG. 19(a)

FIG. 19(b)

41

EP 0 452 944 A1

## FIG. 20(a)

## FIG. 20(b)

## FIG. 20(c)

## FIG. 20(d)

## FIG. 20(e)

# FIG. 21(a)

PARTS NUMBER

| 1 | 2 | 3 | 4 | 5 | 6 | 7 | 8 |

ASSEMBLING ORDER

PLEASE INPUT THE PART NUMBER _

# FIG. 21(b)

PART                          ASSEMBLING ORDER

```
1. LOWER WING
2. FRONT BODY
3. REAR BODY
4. UPPER WING
5. HORIZONTAL STABILIZER
6. VERTICAL STABILIZER
7. RIGHT STAY
8. LEFT STAY
```

PLEASE INPUT THE PART NUMBER _

## FIG. 21(c)

| NUMBER | NAME |
|--------|------|
| 1 | LOWER WING |
| 2 | FRONT BODY |
| 3 | REAR BODY |
| 4 | UPPER WING |
| 5 | HORIZONTAL STABILIZER |
| 6 | VERTICAL STABILIZER |
| 7 | RIGHT STAY |
| 8 | LEFT STAY |

## FIG. 22(a)

SELECT PART $P_1$ AS THE FIRST ASSEMBLING PART

CLEAR THE ROW OF PART $P_1$

ASSEMBLABLE NEXT

EP 0 452 944 A1

# FIG. 22(b)

PARTS NUMBER

| 2 | 3 | 4 | 5 | 6 | 7 | 8 |

ASSEMBLING ORDER

| 1 |

PLEASE INPUT THE PART NUMBER _

# FIG. 22(c)

PART                                ASSEMBLING ORDER

                                    1. LOWER WING

2. FRONT BODY
3. REAR BODY
4. UPPER WING
5. HORIZONTAL STABILIZER
6. VERTICAL STABILIZER
7. RIGHT STAY
8. LEFT STAY

PLEASE INPUT THE PART NUMBER _

# FIG. 23

PARTIAL ASSEMBLING 1

PARTIAL ASSEMBLING 2

PRODUCT

EP 0 452 944 A1

## FIG. 24(a)

PART

1. LOWER WING
2. FRONT BODY
3. REAR BODY
4. UPPER WING
5. HORIZONTAL STABILIZER
6. VERTICAL STABILIZER
7. RIGHT STAY
8. LEFT STAY

| |
|---|
| START PARTIAL ASSEMBLING |
| END PARTIAL ASSEMBLING |
| ADD A PART |
| ADD A PARTIAL ASSEMBLING |
| DELETE A PART |
| CANCEL A PARTIAL ASSEMBLING |
| CANCEL |
| DISPLAY |
| END |

## FIG. 24(b)

PART

1. LOWER WING
2. FRONT BODY
3. REAR BODY
4. UPPER WING
5. HORIZONTAL STABILIZER
6. VERTICAL STABILIZER
7. RIGHT STAY
8. LEFT STAY

| |
|---|
| START PARTIAL ASSEMBLING |
| END PARTIAL ASSEMBLING |
| ADD A PART |
| ADD A PARTIAL ASSEMBLING |
| DELETE A PART |
| CANCEL A PARTIAL ASSEMBLING |
| CANCEL |
| DISPLAY |
| END |

PLEASE INPUT THE PARTIAL ASSEMBLING NUMBER _

# FIG. 24(c)

| PART | PARTIAL ASSEMBLING 1 | |
|---|---|---|
| 1. LOWER WING<br>2. FRONT BODY<br>3. REAR BODY<br>4. UPPER WING<br>5. HORIZONTAL STABILIZER<br>6. VERTICAL STABILIZER<br>7. RIGHT STAY<br>8. LEFT STAY | 1. LOWER WING<br>2. FRONT BODY<br>3. UPPER WING<br>4. RIGHT STAY<br>5. LEFT STAY | START PARTIAL ASSEMBLING<br><br>END PARTIAL ASSEMBLING<br><br>ADD A PART<br><br>ADD A PARTIAL ASSEMBLING<br><br>DELETE A PART<br><br>CANCEL A PARTIAL ASSEMBLING<br><br>CANCEL<br><br>DISPLAY<br><br>END |

# FIG. 25

PARTIAL PRODUCT
STRUCTURE
DATA

(PARTIAL ASSEMBLING 1)

PARTIAL ASSEMBLING
PRECEDENCE RELATION
DATA

(PARTIAL ASSEMBLING 1)

PARTIAL PRODUCT
STRUCTURE
DATA

(PARTIAL ASSEMBLING 2)

PARTIAL ASSEMBLING
PRECEDENCE RELATION
DATA

(PARTIAL ASSEMBLING 2)

EP 0 452 944 A1

# FIG. 26(a)

PREVIOUS
NEXT
FIRST
LAST
END

SPECIFY A PART FOR ASSEMBLING START

# FIG. 26(b)

PREVIOUS
NEXT
FIRST
LAST
END

SPECIFY A PART FOR ASSEMBLING START

## FIG. 27(a)

PREVIOUS
NEXT
FIRST
LAST
END

SPECIFY A PART FOR THE NEXT ASSEMBLING

## FIG. 27(b)

PREVIOUS
NEXT
FIRST
LAST
END

SPECIFY A PART FOR THE NEXT ASSEMBLING

# FIG. 28

SPECIFY A PART FOR THE NEXT ASSEMBLING

| FIRST | LAST |
| PREVIOUS | NEXT |

| PART SELECTION | |
| TRANS. | ROT. |
| HOME | RESET |
| CONNECT | DEPARTURE |

| MAG. | REDUCE | TRANS. | VIEW POINT | DIS. | HOME | | | | | | END |

⇐ MENU SWITCH BY COMMAND SELECTION

TRANS. →

| TRANS. X | TRANS.Y | TRANS. Z | ROT. X | ROT. Y | ROT. Z | HOME | END | | |

VIEW POINT →

| UP | DOWN | LEFT | RIGHT | FRONT | BACK | HOME | END | | |

DISPLAY →

| COMP. VIEW | ASSY. VIEW | END | | | | | | | |

# FIG. 29

| | | |
|---|---|---|
| FIRST | LAST | |
| PREVIOUS | NEXT | |

START THE CONCURRENT ASSEMBLY

END THE CONCURRENT ASSEMBLY

| PART SELECTION | |
|---|---|
| TRANS. | ROT. |
| HOME | RESET |
| CONNECT | DEPARTURE |

SPECIFY PARTS FOR A CONCURRENT ASSEMBLIY

| MAG. | REDUCE | TRANS. | VIEW POINT | DIS. | HOME | | | | | | END |

FIG. 30(a)

$P_1 \longrightarrow P_2 \longrightarrow P_7 \longrightarrow P_8 \longrightarrow P_3$

$(M_1) \qquad (M_2) \qquad (M_1) \qquad (M_2) \qquad (M_1)$

FIG. 30(b)

$P_1 \longrightarrow P_2 \longrightarrow P_7 \longrightarrow P_8 \longrightarrow P_3$

$(M_1) \qquad (M_2) \qquad (M_3) \qquad (M_1) \qquad (M_2)$

FIG. 30(c)

$P_1 \longrightarrow P_2 \longrightarrow P_7 \; (M_1)$

$(M_1) \qquad (M_2) \qquad\qquad P_8 \; (M_2)$

$P_3 \; (M_3)$

FIG. 30(d)

| PROCESS NO | ASSEMBLING PART NAME |
|------------|----------------------|
| 1 | $P_1$ |
| 2 | $P_2$ |
| 3 | $P_3, P_7, P_8$ |
| ⋮ | |

## DOCUMENTS CONSIDERED TO BE RELEVANT

EP 91106262.8

| Category | Citation of document with indication, where appropriate, of relevant passages | Relevant to claim | CLASSIFICATION OF THE APPLICATION (Int. Cl.5) |
|---|---|---|---|
| A | <u>US - A - 4 835 450</u><br>(SUZUKI)<br>   * Totality *<br>—— | 1,3,4,<br>7,9,10 | G 05 B 19/42<br>B 25 J 9/18 |
| A | <u>US - A - 4 831 548</u><br>(MATOBA)<br>   * Totality *<br>—— | 1,3,4,<br>7,9,10 | |
| A | <u>US - A - 4 260 940</u><br>(ENGELBERGER et al.)<br>   * Column 3, line 3 - column<br>   7, line 5 *<br>—— | 1,3,4 | |
| A | <u>US - A - 4 287 459</u><br>(DAHLSTRÖM)<br>   * Column 2, line 64 - column<br>   4, line 26; column 5, line<br>   66 - column 6, line 50 *<br>———— | 1,3,4 | |

TECHNICAL FIELDS
SEARCHED (Int. Cl.5)

G 05 B 19/00
B 25 J 9/00

The present search report has been drawn up for all claims

| Place of search | Date of completion of the search | Examiner |
|---|---|---|
| VIENNA | 21-06-1991 | FIETZ |

EPO FORM 1503 03 82 (P0401)